(19) Europäisches Patentamt
European Patent Office
Office européen des brevets

(11) **EP 1 195 874 B1**

(12) **EUROPEAN PATENT SPECIFICATION**

(45) Date of publication and mention
of the grant of the patent:
**25.04.2012 Bulletin 2012/17**

(51) Int Cl.:
***H02H 3/40*** (2006.01)

(21) Application number: **01660176.7**

(22) Date of filing: **21.09.2001**

(54) **Method for identification of a faulting or faulted sending end or feeder branch in an electrical distribution system**

Verfahren zur Identifizierung einer Fehler auf der Sendeseite oder in Abzweigkoppler in einem Stromverteilungssystem

Procédé d'identification d'un défaut du coté réception ou dans un coupleur de dérivation dans un système de distribution électrique

(84) Designated Contracting States:
**DE FR GB IT**

(30) Priority: **22.09.2000 FI 20002096**

(43) Date of publication of application:
**10.04.2002 Bulletin 2002/15**

(73) Proprietor: **ABB OY**
**00380 Helsinki (FI)**

(72) Inventor: **Nikander, Ari**
**33820 Tampere (FI)**

(74) Representative: **Arvela, Sakari Mikael et al**
**Seppo Laine Oy**
**Itämerenkatu 3 B**
**00180 Helsinki (FI)**

(56) References cited:
**WO-A-98/20356**

**Description**

The invention relates to a method in accordance with claim 1 for identification of an impending fault condition or faulted feeder or feeder branch in an isolated-neutral or compensated network.

More specifically, the invention concerns a station-level monitoring method based on monitoring the insulation condition of an electrical distribution system, such as a medium-voltage network, suitable for providing information for a numerical multifunction protective relay.

Conventionally, the detection of high-resistance ground faults is attempted through monitoring the absolute value of the zero-sequence voltage of an electric power system and the changes occurring therein. When the zero-sequence voltage exceeds a threshold value, an alarm signal is issued. This method provides no information on the location of the fault in the network.

EP patent publication 97942985.9 (FI Pat. No. 100922 EP-981572) discloses a method for detection and location of a high-resistance ground fault. Therein, fault indication is basically carried out as follows: the line-to-neutral voltages of the network with their phase angles are measured at the distribution substation, whereupon the zero-sequence voltage ($\underline{U}_0$) of the network is computed as a vector sum of the measured line-to-neutral voltages; the network zero-sequence impedance ($\underline{Z}_0$) is computed; and the zero-sequence voltage ($\underline{U}_0$) is compared to the line-to-neutral voltages ($\underline{U}_v$) and the total zero-sequence impedance ($\underline{Z}_0$) of the network. The variables thus obtained are then utilized for computing the fault impedances ($\underline{Z}_f$) for each phase separately and the phase conductor with the largest real part of the fault impedance ($\underline{Z}_f$) is assumed to be the faulted phase. The method measures a 10-minute average of the zero-sequence voltage and the changes thereof. Thus, the method cannot respond to fast changes in the zero-sequence voltage.

EP patent publication 98941445.3 (FI Pat. No. 103217) describes a method for locating a high-resistance ground fault of an electric distribution network on the basis of current measurements. The method is based on computing measured changes in the zero-sequence voltage and current of a feeder with regard to some longer-term average. The changes thus determined in the zero-sequence current are corrected by subtracting therefrom the effect of the current passing through the zero-sequence impedance in an unfaulted state of the feeder. Based on the thus compensated current changes, the faulted line section is assumed to be the one with the greatest change in the absolute values of its currents, whereby the change must also exceed a predetermined threshold.

US Pat. No. 4,729,052 discloses a method wherein the occurrence of a ground fault is detected by changing the neutral point grounding impedance of the network and then measuring the effect of the change on the neutral point voltage. This method is suitable for use in resonant-grounded systems only.

WO patent publication No. 9,627,138 (FI Pat. No. 973520) describes a method for detecting a single-phase ground fault in a three-phase network having the neutral point grounded via a ground-fault arc suppression coil. The method requires real-time information on the line-to-ground admittance of the feeder as well as on the unsymmetrical admittance reflecting the line unsymmetry at the feeder. The determination of the fault admittance used for fault indication requires that three pairs of measurement values ($U_0$, $I_0$) are acquired. Hence, the method is highly complicated and is suited only for fully compensated networks having arc-suppression reactors equipped with remote-controlled automatic tuning. Furthermore, the network must exhibit a quite high degree of unsymmetry before a sufficiently high zero-sequence voltage occurs. Most networks fail to meet these requirements.

The above-described prior art techniques are hampered by several drawbacks.

The fault indication sensitivity of the prior-art methods is inadequate, which excludes their use as insulation condition indicating methods capable of monitoring each one of the network feeders individually. The most advanced computation methods require real-time information on the electrical length of the line and are sensitive to errors in the value of the ground admittance. Also the inadequate resolution of measurement devices commonly used at substations makes it impossible to determine by computational means the real part of the line-to-ground admittance, i.e., the physically correct value of ground conductance. Furthermore, the value of ground conductance is likely to vary with the weather conditions, for instance.

A fault indication method based on monitoring the RMS value of the network zero-sequence voltage provides no information on the location of a fault in the network. A very-high-resistance ground fault may impose a greater change to the phase angle of the zero-sequence voltage than to the absolute value of the voltage, which information cannot be exploited by a method based on zero-sequence voltage monitoring. Weather phenomena (e.g., snowfall) and changes in the network configuration or the tuning of the arc-suppression reactor of a compensated network also give rise to changes in the zero-sequence voltage of the network. Such changes are difficult to distinguish from those inflicted on the zero-sequence voltage by ground fault of a very high resistance, which makes the sensitivity of this method less than sufficient.

Prior-art methods for detecting high-resistance ground faults do not facilitate network monitoring individually for each feeder because the faulted feeder fault has to be resolved after the occurrence of the fault from the changes in the zero-sequence currents at the feeders. E.g., the method described in EP patent publication 97942985.9 is suited only for monitoring the overall leakage resistance of all phases of the network. The computation of the network zero-sequence impedance in said method is based on the zero-sequence susceptance values reported by the line conductor manufacturers that often involve notable inaccuracy. The line-to-ground capacitances of the network can be measured by means of ground fault tests, but such results are valid only for the network configuration prevailing during the tests. Furthermore, the network zero-sequence impedance must be computed within a higher-level system, whereupon the information must be transmitted to a protective relay. The benefits of the method include detection of the faulted phase and relatively good sensitivity.

According to the method disclosed in EP patent publication No. 97942985.9, the zero-sequence impedances of the feeders are only computed in conjunction with low-resistance ground faults. A fault is categorized as a low-resistance ground fault if the ground resistance $R_F$ is less than 5 kohm or if the zero-sequence voltage exceeds 50 % of the normal-condition line-to-neutral voltage. The method fails if the zero-sequence impedance of the feeder has changed due to network reconfiguration and no real-time value of the zero-sequence impedance is available when the fault occurs. The method is sensitive to error in the value of the zero-sequence impedance. In a fully compensated network where the ground-fault current is almost fully compensated, the change in the zero-sequence current at the feeder caused by a ground fault occurs in the same direction as the changes in the zero-sequence currents of the unfaulted feeders and has a magnitude approximately corresponding to the electrical length of the faulted feeder. Hereby the compensated current change computed by this method is close to zero even for a faulted feeder. Hence, the reliability of the method may be uncertain in a fully compensated network.

It is an object of the present invention to provide an entirely novel type of method for the identification of an impending fault condition of feeder or faulted feeder or feeder branch in an electrical distribution system.

The invention is based on detecting an impending fault condition of feeder or faulted feeder or feeder branch from the direction of change in the feeder sum current or from the sign of the imaginary part of the feeder ground admittance.

More specifically, the method according to the invention is characterized by what is stated in the characterizing part of claim 1.

The invention provides significant benefits.

The major advantage of certain embodiments of the invention over the methods and publications cited above is related to the simplicity of a practicable realization of the method and the possibility of embedding the method as a part of other network automation. Implementing the method in practice does not require *a priori* knowledge on the electrotechnical data of the network components (that is, the network parameter values). In fact, the present method can be appreciated as a black box whose input signals depending on its application are, e.g., the measured zero-sequence voltages, line-to-ground voltages and sum currents, while the output of the black box gives an indication of a ground fault that is sent as a unilateral event signal to a higher level automation system. The method can be implemented if so desired within a single feeder terminal and the fault indication does not need communications with other protective relays or information processing systems, which makes the present method more robust and flexible than, e.g., the method disclosed in EP patent publication 97942985.9. Furthermore, a secondary relay/substation associated with certain embodiments of the invention can be readily installed at a field disconnector terminal unit of the network. Inasmuch also this kind of application does not necessarily need supplementary initial information or communications with higher level relays or information systems for fault indication, a practical implementation of the present method is substantially more straightforward to implement than the method described in EP patent publication 97942985.9.

An advantage of the invention over the methods disclosed in US Pat. No. 4,729,052 and reference publication [Lei97] that the neutral point of the electrical network need not necessarily be provided with additional components that must be incorporated as an integral part of the network protective system. Another advantage is that faults in isolated-neutral and resistance-grounded networks can be identified and located in an improved fashion by means of suitable applications of the invention.

Perhaps the most significant benefit of the invention is that an impending fault condition of feeder or feeder branch of an electrical distribution system can be detected without knowing *a priori* the specific parameter values of lines such as the line-to-ground susceptances ($B_0$). Furthermore, there is no need to determine the line-to-ground admittances by measurements. Additionally, fault indication can be made to operate reliably at all times, even when the fault occurs immediately after a configuration change at the feeder.

Accordingly, the invention has a plurality of advantageous embodiments that offer various additional benefits.

Firstly, the method according to the invention can be used in a continuous manner. In contrast, the so-called DDA method described in reference publication [Lei97] is chiefly suited for monitoring on the basis of singular measurements only. Another significant benefit of the present invention over the method disclosed in cited reference publication [Lei97] is that an impending fault condition of feeder or feeder branch can be identified without having *a priori* knowledge on the ground admittance of the feeder. This feature makes it possible to avoid the uncertainty and inaccuracy related to the value of the ground admittance, particularly to the ground conductance, of the feeder. Hereby, the sensitivity of fault indication and accuracy of fault resistance computation is improved. In practice, the physical line-to-ground conductance cannot be determined by means of the measurement instruments available at substations. As to its computation algorithm, the method of the invention differs entirely from the methods used in the reference publication [Lei97]. When applied according to its preferred embodiment, the method according to the invention can respond in ground-fault current monitoring of a feeder to changes that occur over a time interval greater than one cycle of the network frequency, which in a favorable contrast to a method disclosed, e.g., in FI patent publication 100922 B that monitors the zero-sequence voltage using a long-term value of the voltage averaged over several minutes and changes occurring therein.

In such embodiments of the invention that utilize computations based on the line-to-ground admittances, it is possible by way of determining the line-to-ground admittances to both improve the accuracy of the fault current computations over those based on values derived computationally from the network data and provide the protective relay with the most recent information on the electrical length of a feeder. Resultingly, the value of ground resistance that reflects the insulation condition of a given feeder can be determined at a higher accuracy. In the determination of the electrical length of a feeder, the method can utilize such changes in the zero-sequence voltage that occur in a natural manner. Herein, the line-to-ground susceptance of a feeder can be computed in conjunction with low-resistance ground faults. The computation algorithms used do not require changes in the network compensation. If the network is of the compensated type and is equipped with an arc-suppression reactor controlled by an automatic tuning device, also a change in the zero-sequence voltage caused by tuning alterations can be utilized in the computation of the line-to ground admittances of the feeders.

In practice, the preferred embodiments of the invention facilitate monitoring the feeders of a network individually. The method is capable detecting an existing fault and a faulty feeder. The value of fault resistance can be computed using a procedure to be described later in the text.

A further benefit of the invention is that its implementation does not necessarily need installation of new equipment, measurement means or transducers, but rather, its computational algorithms can be embedded by software means into digital multifunction relays so as to make use of existing measurement means.

As the computation of line-to-ground admittance at a feeder is based on a change in the zero-sequence current and the zero-sequence voltage instead of the absolute values of these variables, the error factor caused by the capacitance unsymmetry of the feeder is eliminated. It must be borne in mind that in an unfaulted network or during a very-high-resistance ground fault where the zero-sequence voltage is low, the current component caused by capacitance unsymmetry is generally a significant factor in the total sum current of a feeder of an overhead line.

The values to be measured for the zero-sequence voltage and sum current and the changes occurring therein are small as compared to the rated value of measurement devices. Luckily, the method according to the invention utilizes only the change in the value of a measured variable rather than a discrete measurement value. Then, a significant portion of measurement error is cancelled, because any error tends to be in the same direction in the measurement performed before and after the change in the measured variable.

The monitoring of high-resistance ground faults is problematic due to the minimal leakage current of a feeder. In these faults, the most sensitive indicator variable that can be measured directly from the network is the zero-sequence voltage. However, a fault indication technique based on the RMS value of the zero-sequence voltage or a change in the leakage resistance of the entire network does not directly indicate the faulted feeder that must be identified by other methods. Advantageously, the embodiments of the present invention are capable of monitoring each feeder separately.

A significant benefit of the preferred embodiments of the method over prior-art techniques is appreciated in its continuous operation. This kind of continuously operating method is capable of responding to very fast changes in the zero-sequence voltage (having a duration equal or greater than one cycle of the network frequency). Hence, these novel methods can be used for detecting disturbances of a very short duration and even transient nature. Furthermore, they give the protective relays of the feeder the most recent data on the electrical length and insulation condition of the feeder. The method requires no information transmission between the protective relay and higher-level automation systems or relays. Furthermore, the embodiments of the invention disclosed herein may also be used for preventing secondary faults due to a ground fault (such as double ground faults) inasmuch faults can be detected before they impose any extra load on the unfaulted phases of the network.

The methods according to the preferred embodiments can indicate a decreased insulation condition of a feeder in an electrical distribution system at a sensitivity level much better than that of prior-art techniques thus making it possible to detect faults of higher resistance than what has conventionally been feasible. Furthermore, the existence of a fault can be detected more reliably and sensitively than before, because the identification of the faulted feeder needs no a priori computed ground admittance values. The difference of fault resistance computed for a faulted and an unfaulted feeder is much more distinctive over that given by the DDA method disclosed in reference publication [Lei97].

The method described is broadly advantageous as it requires no new measurement arrangements or devices. All that is needed is the programming of a new functional block or blocks on the relay.

In the following, the invention will be described in more detail with the help of exemplary embodiments by making reference to the appended drawings, wherein

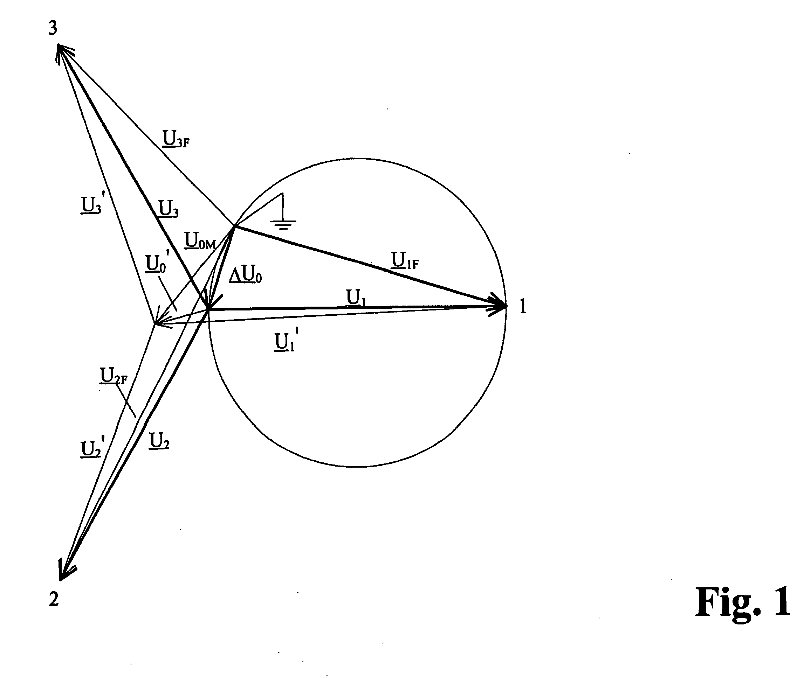

FIG. 1 is a graphical vector representation of the symmetrical line-to-neutral voltages of a network, the unsymmetrical line-to-neutral voltages in an unfaulted state of the network, the unsymmetrical line-to-neutral voltages during a fault and the corresponding zero-sequence voltages during the unfaulted and faulted condition of the network for a single-phase ground fault in an isolated-neutral network;

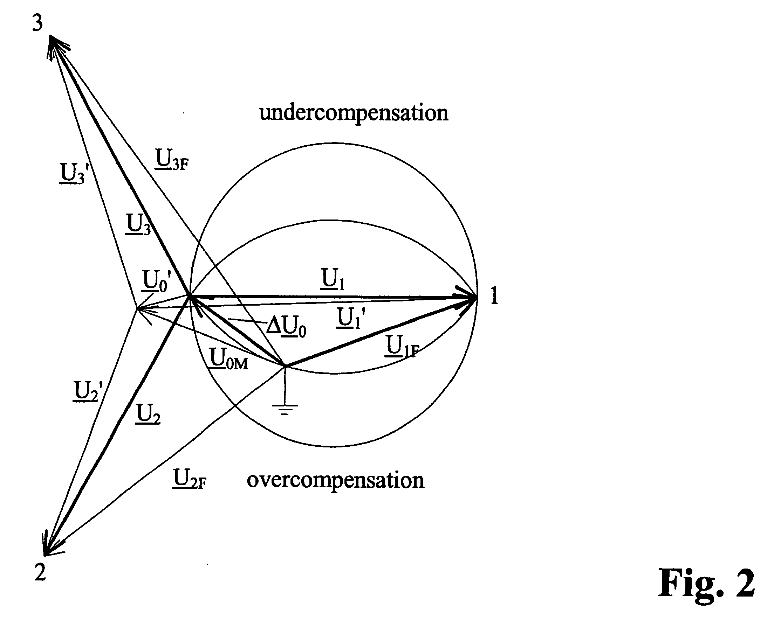

FIG. 2 is a graphical vector representation of the symmetrical line-to-neutral voltages of a network, the unsymmetrical line-to-neutral voltages in an unfaulted state of the network, the unsymmetrical line-to-neutral voltages during a fault and the corresponding zero-sequence voltages during the unfaulted and faulted condition of the network for a single-phase ground fault in a compensated network; and

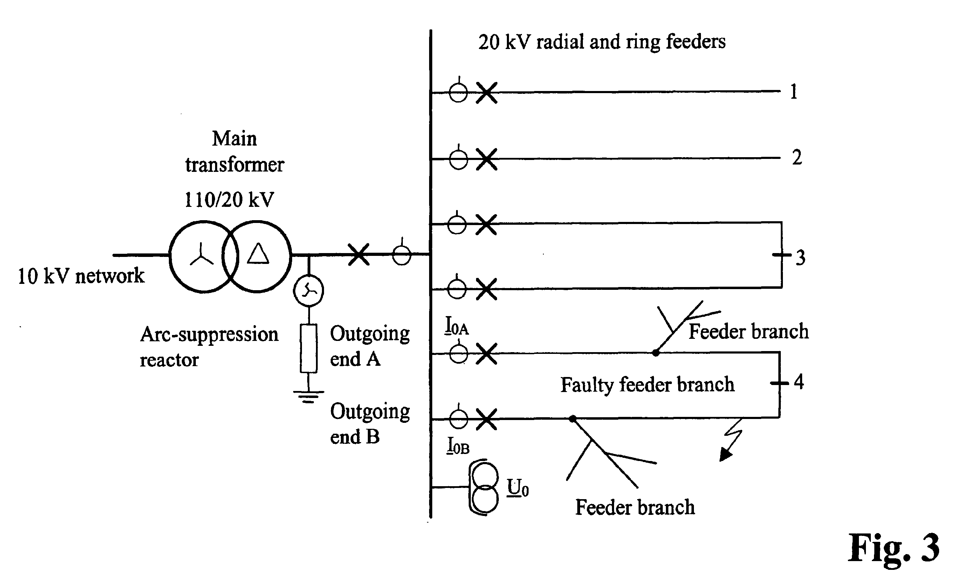

Figure 3 illustrates an exemplary embodiment of a compensated medium-voltage network comprising both radial feeders and ring feeders. The feeders connected in a ring are supplied from one and the same substation, e.g. a 110/20 kV station.

In the context of the present invention, the terms sum current and zero-sequence current are used equally when reference is made to the sum of the phase currents, particularly to the vector sum of the phase currents or to a sum current computed from the respective phasors. The sum current of a feeder can be measured using a cable current transformer, for example.

In an electrical network, the line-to-ground admittance $\underline{Y}_{0i}$ of a feeder i can be computed by dividing the change in the zero-sequence current $\Delta\underline{I}_{0i}$ with the change in the zero-sequence voltage $\Delta\underline{U}_0$ of the feeder. In the line-to-ground admittance thus computed, the real part of represents the conductance between the phases of the feeder and the ground, while the imaginary part represents the susceptance of the phases to the ground due to the line-to-ground capacitances:

$$\underline{Y}_{0i} = \frac{1}{R_{0i}} + j\omega C_{0i} = G_{0i} + jB_{0i} = \frac{\Delta\underline{I}_{0i}}{\Delta\underline{U}_0} \tag{1}$$

where

| | |
|---|---|
| $R_{0i}$ | = leakage resistance from the three phases to the ground |
| $G_{0i}$ | = line-to-ground conductance summed for the three phases |
| $C_{0i}$ | = line-to-ground capacitance summed for the three phases |
| $B_{0i}$ | = line-to-ground susceptance summed for the three phases |
| $\omega$ | = angular frequency. |

Normally, the physical leakage resistance of an unfaulted feeder connected to a feeder is in the range of megaohms, and thus, the line-to-ground conductance is in the order of $10^{-6}$ $1/\Omega$. The line-to-ground conductance values computed from Eq. 1 on the basis of field measurements are often within the same decade with the corresponding line-to-ground susceptance of the feeder. As this is contradictory to physical facts, the line-to-ground susceptance values thus obtained may be considered to represent a virtual parameter value, chiefly traceable to measurement inaccuracies. The resolution of measurement devices at substations and the sampling rate of digital protective relays are generally not adequate for determining the physically correct line-to-ground conductance of a feeder or the entire network by this technique. A more sensitive detection method in monitoring the electrical insulation condition of a feeder in an electric network is obtained if the line leakage resistance in the normal condition of the feeder is ignored altogether, and instead, only the line-to-ground susceptance of the feeder and the reactive component of the sum current thereof are used for computing the fault resistance. This approach allows the detection of a ground fault to be extended to fault resistances of significantly higher magnitude than what has been possible by previously known methods and, moreover, its computation algorithms give fault resistance values of an improved accuracy. According to field measurements performed and the experience gathered therefrom, the line-to-ground susceptance computed from Eq. 1 corresponds to the electrical length of the feeder to a very good accuracy.

**Determination of the insulation condition of a feeder in an electrical network**

In the following, a method is described for determining the electrical insulation condition of a feeder in an electric network from the fault resistance, whereby in the method the fault resistance is computed individually for each feeder.

As the computation uses only the imaginary part of the unfaulted-condition line-to-ground admittance of the feeder, that is, the line-to-ground susceptance, it is necessary to eliminate the reactive component from the sum current of the feeder. It must be noted that the sum current of the feeder also contains a component caused by the unsymmetry of the line-to-ground capacitances. Furthermore, at the level of the entire network, the unsymmetry of the line-to-ground capacitances gives rise to a small zero-sequence voltage in the network even under normal conditions. Hence, the effect of the unsymmetry of the line-to-ground capacitances must be eliminated from both the zero-sequence voltage and the sum currents of the feeders. In this manner, the computation is brought back to that of a symmetrical initial condition.

The computation starts with a change in the zero-sequence voltage of the network. The absolute value of the zero-sequence voltage change is computed from Eq. 2 given below. If the zero-sequence voltage change is caused by a ground fault, $\Delta \underline{U}_0$ is equal to the zero-sequence voltage component caused the ground fault (see FIG. 1) inasmuch the zero-sequence voltage of the unfaulted condition is subtracted from the zero-sequence voltage measured during the ground fault. This step eliminates the contribution of capacitance unsymmetry to the measured value of the zero-sequence voltage. When the absolute value of $\Delta \underline{U}_0$ exceeds a predetermined threshold value $U_{0k}$, the identification of the faulted phase and the computation of the fault resistance are started for all feeders. The vector $\Delta \underline{U}_0$ is also used as a reference vector in the computation.

$$\left| \Delta \underline{U}_0 \right| = \left| \underline{U}_{0M} - \underline{U}_0^{'} \right| \ge U_{0k} \tag{2}$$

where

$\underline{U}_0^{'}$   = measured zero-sequence voltage prior to change (normal network condition)
$\underline{U}_{0M}$   = measured zero-sequence voltage after change (possibly faulted network condition)

The fault resistance is computed individually for each feeder from the equation given below. All underlined symbols refer to vector variables. The vectors used in the computation are determined by simultaneous measurements. The computation of fault resistance is performed separately for each phase using the line-to-ground voltage of the faulted phase in the equations.

$$R_{Fi} = \frac{\left| \underline{U}_{vF} \right| \sin \varphi_{U_{vF}}}{\left| \Delta \underline{I}_{0i} \right| \sin \varphi_{I_{0i}} + B_{0i} \left| \Delta \underline{U}_0 \right|} \tag{3}$$

$$\Delta \underline{I}_{0i} = \underline{I}_{02i} - \underline{I}_{01i} \tag{4}$$

where

$R_{Fi}$   = fault resistance at feeder i
$\underline{U}_{vF}$   = voltage between faulted phase and ground
$\varphi_{U_{vF}}$   = differential phase angle between voltage vector $\underline{U}_{vF}$ of faulted phase and vector $\Delta \underline{U}_0$
$\Delta I_{0i}$   = change in the sum current at feeder i
$I_{01i}$   = sum current at feeder i prior to change in zero-sequence voltage
$I_{02i}$   = sum current at feeder i after change in zero-sequence voltage
$\varphi_{I_{0i}}$   = differential phase angle between vectors $\Delta I_{0i}$ and $\Delta \underline{U}_0$
$B_{0i}$   = summed line-to-ground susceptance of the three phases at feeder i (imaginary part of line-to-ground admittance).

The zero-sequence susceptance values $B_0$ of a feeders are always updated in connection with low-resistance ground faults. If necessary, also $B_0$ values computed from network data may be used. The method disclosed herein is not sensitive to an error in the value of the zero-sequence susceptance of a feeder, because it does not need the value of $B_0$ at all for identifying a faulted phase and, besides, also the order of magnitude of the fault resistance indicates the occurrence of a fault.

The method described above may be carried out repetitively at arbitrary instants of time in order to compute $R_F$ so that a desired feeder or feeders can be monitored on a continuous basis. When the fault resistance $R_F$ is smaller than its predetermined threshold value $R_{Fk}$, the feeder is interpreted as faulted. The time interval in the determination of $R_F$ may be made as short as one cycle of the network frequency thus allowing even temporary ground faults of short duration to be identified.

**I Determination of electrical insulation condition of feeders feeding a ring in an electrical network**

A high-voltage electrical distribution network is usually configured using ring feeders to provide alternative feed paths in a faulted network and to improve the overall reliability of the network. In the following, the indication of a ground fault is examined in the case of feeders configured into a ring feeder. The feeders (feeders A+B in FIG. 3) comprise two radial feeders supplied by the feeders (feeders A and B of FIG. 3) that are connected to each other in the field so as to form a ring feeder.

Very high-resistance ground faults occurring in a ring feeder can be identified using the same algorithm (Eq. 3) as that applicable in the case of a radial feeder. The only difference is that sum current of the radial feeder is replaced by the sum current of the zero-sequence current of the radial feeder. The fault resistance is computed from Eq. 5 with the feeders A and B being connected in a ring using the notations of FIG. 3. The term "total sum current of ring-connected feeders" is used to denote the sum of the zero-sequence currents of feeders A and B.

$$R_{Fi} = \frac{\left|\underline{U}_{vF}\right| \sin \varphi_{U_{vF}}}{\left|\Delta \underline{I}_{0AB}\right| \sin \varphi_{I_{0AB}} + B_{0r}\left|\Delta \underline{U}_0\right|} \tag{5}$$

$$\Delta \underline{U}_0 = \underline{U}_{0M} - \underline{U}_0' \tag{6}$$

$$\Delta \underline{I}_{0AB} = \left(\underline{I}_{0A2} + \underline{I}_{0B2}\right) - \left(\underline{I}_{0A1} + \underline{I}_{0B1}\right) \tag{7}$$

$$\varphi_{U_0} = \arg\left(\underline{U}_{0M} - \underline{U}_0'\right), \quad \varphi_{I_{0AB}} = \arg\left(\Delta \underline{I}_{0AB}\right) - \varphi_{U_0} \tag{8}$$

where

| | |
|---|---|
| $R_{Fi}$ | = fault resistance at ring-connected feeder i |
| $\underline{U}_0'$ | = zero-sequence voltage of network prior to change |
| $\underline{U}_{0M}$ | = zero-sequence voltage of network after change |
| $\underline{I}_{0A1}$ | = zero-sequence sum current of ring-connected feeder A prior to change in zero-sequence voltage |
| $\underline{I}_{0B1}$ | = zero-sequence sum current of ring-connected feeder B prior to change in zero-sequence voltage |
| $\underline{I}_{0A2}$ | = zero-sequence sum current of ring-connected feeder A after change in zero- sequence voltage |
| $\underline{I}_{0B2}$ | = zero-sequence sum current of ring-connected feeder B after change in zero- sequence voltage |
| $\varphi_{U_0}$ | =phase angle of vector $\Delta \underline{U}_0$ |
| $\varphi_{I_{0AB}}$ | = differential phase angle between vectors $\Delta \underline{I}_{0AB}$ and $\Delta \underline{U}_0$ |
| $B_{0r}$ | = summed line-to-ground susceptance of a ring-connected feeder (FIG. 3: A+B) (sum of all three phases). |

Fault resistance computation is performed separately for each phase using the line-to-neutral voltage of the faulted phase in the equations. The ring connection of the feeders does not interfere with the identification of the faulted phase inasmuch this step is carried out by means of the line-to-neutral voltages and the zero-sequence voltage in the manner explained below.

**Identification of a faulted phase in an isolated-neutral network**

When the absolute value of $\Delta\underline{U}_0$ exceeds a predetermined threshold, the first task is to identify the faulted phase. The identification of a faulted phase is performed in a slightly different manner in regard to an isolated-neutral network and a resonant-ground network. In fact, the indication technique of a faulted phase in itself serves as a sensitive method of ground fault indication.

In FIG. 1 are shown in vector form the symmetrical line-to-neutral voltages of an isolated-neutral network, the unsymmetrical line-to-neutral voltages in an unfaulted state, the unsymmetrical line-to-neutral voltages during a ground fault, the zero-sequence voltage in an unfaulted state, the zero-sequence voltage measured during a ground fault, and the zero-sequence voltage representing a system of symmetrical initial state after a ground fault. In an isolated-neutral network, the zero-sequence voltage and the voltage of a faulted phase trace a semicircular arc as a function of the fault resistance. This means that during a ground fault, the voltage of a faulted phase leads by 90˚ the zero-sequence voltage ($\Delta\underline{U}_0$) of a symmetrical initial state irrespective of the magnitude of the fault resistance. In practice, even normally operating network always has a small zero-sequence voltage due to the unsymmetry of the line-to-ground capacitances, whereby also the line-to-neutral voltages in an unfaulted network are unsymmetrical. When the vector of the zero-sequence voltage measured prior to the fault is subtracted from the vector of the zero-sequence voltage measured during the fault, a zero-sequence voltage representing a symmetrical initial state is obtained. The faulted phase is interpreted to be the one having its line-to-neutral voltage leading the reference vector $\Delta\underline{U}_0$ by approximately 90˚. In practice, due to measurement inaccuracies, the lead angle may deviate a few degrees from this threshold value. Having for example phase 1 faulted, the voltage phasor angles of the individual phases in regard to the zero-sequence voltage phasor are as follows. The equations are computed assuming an ideal case (90˚ lead).

$$\varphi_{U_{1F}} = 90°, \qquad \varphi_{U_{2F}} = \varphi_{U_{1F}} - 120° = -30°, \qquad \varphi_{U_{3F}} = \varphi_{U_{1F}} - 240° = -150° \qquad (9)$$

The following notations are used in FIG. 1:

1,2,3 = phase subindexes
$\underline{U}_0$' = zero-sequence voltage during unfaulted state
$\underline{U}_{0M}$ = zero-sequence voltage measured during ground fault
$\Delta\underline{U}_0$ = zero-sequence voltage during ground fault corresponding to a symmetrical initial state
$\underline{U}_1, \underline{U}_2, \underline{U}_3$ = symmetrical line-to-neutral voltages
$\underline{U}_1$' $\underline{U}_2$', $\underline{U}_3$' = unsymmetrical line-to-ground voltages during unfaulted state
$\underline{U}_{1F}, \underline{U}_{2F}, \underline{U}_{3F}$ = unsymmetrical line-to-ground voltages during ground fault

The voltage between a faulted phase and ground during a ground fault is independent from the capacitance unsymmetry of the network and the zero-sequence voltage measured in an unfaulted state (Figure 1). The zero-sequence voltage $\Delta\underline{U}_0$ corresponding to an unfaulted initial state may be computed from the following equation.

$$\Delta\underline{U}_0 = \underline{U}_{0M} - \underline{U}_0' \qquad (10)$$

In the identification of a faulted phase and computation of the fault resistance, a zero-sequence voltage corresponding to a symmetrical initial state is used, because only under this condition Eq. (9) defining the phase angles is valid. The phasor of the zero-sequence voltage in an unfaulted state and the phasor of the zero-sequence voltage during a fault are known from measurements. In an isolated-neutral network, the nominator of Eq. 3 is positive in the case of a faulted phase and negative in the case of unfaulted phases. This rule may be used to check the indication result of a faulted phase.

Alternatively, the value of $\Delta\underline{U}_0$ corresponding to an unfaulted initial state may also be determined in another fashion. Herein, those line-to-line voltages of the network which do not change as a consequence of a ground fault are measured continuously. These line-to-line voltages can be used to determine the symmetrical line-to-neutral voltages $\underline{U}_1$, $\underline{U}_2$ and $\underline{U}_3$. These line-to-line voltages should be approximately equal for both an unfaulted state and a ground fault. In practice, the absolute values of the line-to-line voltages differ from each other slightly due to measurement inaccuracy. The voltage may also contain a slight negative-sequence component. The absolute value of the line-to-neutral voltage may be assumed to be equal to, e.g., the average value of three line-to-line voltages:

$$|\underline{U}_1| = |\underline{U}_2| = |\underline{U}_3| = \frac{|\underline{U}_{12}| + |\underline{U}_{13}| + |\underline{U}_{23}|}{3\sqrt{3}} \qquad (11)$$

Accordingly, the absolute values of each one of the symmetrical line-to-neutral voltages $\underline{U}_1$, $\underline{U}_2$, $\underline{U}_3$ (FIG. 1) are set equal to the value of $|\underline{U}_1|$ computed from Eq. 11, and the phase angles are set equal to those of a symmetrical condition. In an unfaulted state, the phase angle of $\underline{U}_1$ equal to that of vector $(\underline{U}_1' - \underline{U}_0')$ or, respectively, during a ground fault, equal to that of vector $(\underline{U}_{1F} - (\underline{U}_{0M} - \underline{U}_0'))$. The phase angles of the line-to-neutral voltages are set equal to their ideal values, e.g., $\arg(\underline{U}_1) = 30°$, $\arg(\underline{U}_2) = -90°$, $\arg(\underline{U}_3) = 150°$. When the absolute values and phase angles of the line-to-neutral voltages are determined in this manner, ideally symmetrical voltages can be utilized in the computations. Resultingly, the zero-sequence voltage $\Delta\underline{U}_0$ corresponding to a symmetrical initial state can be determined directly by means of the measured voltage of the faulted phase and the symmetrical line-to-neutral voltage computed in the above-described manner (FIG. 1 and Eq. 12).

$$\underline{U}_0 = \underline{U}_{1F} - \underline{U}_1 = \underline{U}_{2F} - \underline{U}_2 = \underline{U}_{3F} - \underline{U}_3 \qquad (12)$$

As the line-to-neutral voltages $\underline{U}_{1F}$, $\underline{U}_{2F}$ and $\underline{U}_{3F}$ during a very-high-resistance ground fault are close to those of an unfaulted state, their measurement can be performed with a good accuracy. If the change $\Delta\underline{U}_0$ of the zero-sequence voltage is computed from Eq. 10, the greatest component in the inaccuracy of measurements relates to the value computed for $\Delta\underline{U}_0$. This is because the neutral voltage values to be measured are usually small.

In the identification of a faulted phase, the above-described method already inherently offers a sensitive technique of fault indication. It must be noted that the zero-sequence voltage vector $\underline{U}_0'$, which may be present even in an unfaulted state due the capacitance unsymmetry of the network, can have any phase angle. If the network zero-sequence voltage changes due to a change in line length or unsymmetry, it may haphazardly occur that any one of the line-to-neutral voltage leads by 90° the vector $\Delta\underline{U}_0$ representing a change in the zero-sequence voltage. While the probability of such a situation is small, the result from the identification of a faulted phase is not inherently a fully adequate condition for interpreting the existence of a fault. Herein, the magnitude of the fault resistance will give proof that none of the feeders is faulted. Accordingly, the identification of a possibly faulted phase is a prerequisite for the computation of the fault resistance.

**Identification of a faulted phase in a resonant-ground network**

FIG. 2 illustrates the symmetrical line-to-neutral voltages of a resonant-ground network, the unsymmetrical line-to-neutral voltages in an unfaulted state, the unsymmetrical line-to-neutral voltages during a ground fault, the zero-sequence voltage in an unfaulted state, the zero-sequence voltage representing a system of symmetrical initial state after a ground fault, and the neutral voltage measured during a ground fault. The voltages are denoted by the same symbols as those used in FIG. 1. The zero-sequence voltage and the voltage of a faulted phase trace an arc as a function of the fault resistance, the radius of the arc being determined by the degree of compensation in the network. The upper semicircular arc corresponds to an isolated-neutral situation and the lower semicircular arc to infinite overcompensation.

In a resonant-ground network, the identification of a faulted phase is more complicated to implement than in an isolated-neutral network. Referenced to the zero-sequence voltage $\Delta\underline{U}_0$, the phase angle $\varphi_{U_{vF}}$ of the voltage of a faulted phase may vary between 90° and 180° in an undercompensated network and between -90° and -180° in an overcompensated network. At a low degree of compensation, the phase angle $\varphi_{U_{vF}}$ approaches 90°, while in a clearly overcompensated network the angle is -90°. When the arc-suppression reactor is tuned very close to resonance, the angle $\varphi_{U_{vF}}$ approaches 180°. Hence, the identification of a faulted phase by this technique is not a method as effective in fault indication as that described above for the identification of a faulted phase of an isolated-neutral network. This is because changes in the zero-sequence voltage caused by reasons other than a ground fault are more likely to shift the phase angle of any one of line-to-neutral voltage relative to the zero-sequence voltage $\Delta \underline{U}_0$ to within a range of angle values where the phase is interpreted as faulted. However, the computed fault resistance herein reveals that the feeder is unfaulted. Thus, the method indicates the phase which may be faulted. From the angle $\varphi_{U_{vF}}$, it is also possible to infer whether the network is under- or overcompensated. If a ground fault is detected in the network, the angle $\varphi_{U_{vF}}$ will also make it possible to determine the degree of compensation of the network. This is particularly advantageous when the network is equipped with fixed (nonadjustable) compensation, either at a substation or in a distributed manner at different points of the network, and there is no measurement data available on the neutral currents passing through the reactors. In such a situation, it is difficult to accurately determine the degree of compensation in the network by any other means.

After the network has been tuned to resonance, the zero-sequence voltage vector ($\Delta \underline{U}_0$) is directed in the opposite direction relative to the vector of the symmetrical line-to-neutral voltage of the faulted phase. In a fully compensated symmetrical system, the voltage of the faulted phase is always the lowest, because the residual current is then fully resistive. Also this information can be used as an ensuring condition in the determination of a faulted phase in a network that can be tuned to resonance.

### II Indication of an impending fault condition of feeder or faulted feeder in an electrical network from the direction of change in the sum current vector

Both the method according to Eq. 3 as well as prior-art methods suited for identifying high-resistance faults correctly to the faulted feeder need realtime information on the electrical length of the feeder. For highest possible certainty in the detection and location of ground faults of a very high resistance, e.g., of hundreds of kilo-ohms, a technique is needed capable of eliminating the uncertainty factors associated with the ground susceptance of the feeder. Furthermore, the configuration of the feeder does not necessarily correspond to the value of ground susceptance $B_0$ stored in the system memory if a change has occurred in the feeder configuration just before the fault. The stored value of $B_0$ may also contain error due to inaccuracy in measurements. However, the method described below functions always correctly even if the fault occurs on a feeder whose configuration has changed just recently. As starting data, the method does not need the ground susceptance ($B_0$), whereby inaccuracies in the value thereof cannot affect the result of the indication algorithm.

In an isolated-neutral network, the reactive component of the sum current vector is directed opposite to the direction of the same vector in an unfaulted feeder. In the following, the reactive and real components of the sum current are discussed separately. The sum current vector component related to the capacitance unsymmetry may have any direction, which means that it can contribute virtual real or reactive current to the total sum current. Hence, its effect must be eliminated.

Changes caused by a ground fault in the vector direction of the feeder sum currents are computed for each change in the zero-sequence voltage. A precondition for the start of computation is that the change in the zero-sequence voltage exceeds a predetermined threshold level ($U_{0k}$).

$$\left| \Delta \underline{U}_0 \right| = \left| \underline{U}_{0M} - \underline{U}_0' \right| \geq U_{0k} \qquad\qquad (13)$$

where

$\underline{U}_0'$    = measured zero-sequence voltage prior to the change (normal state of network)
$\underline{U}_{0M}$    = measured zero-sequence voltage after the change (faulted state of network)

Theoretically, it is possible to deduct separately from both the real and the reactive components of the feeder sum current vector the direction toward which the zero-sequence sum current has occurred and, thence, the existence of a fault. However, in an isolated-neutral network, the information deducted from the real component is generally insufficient for this purpose. The most reliable technique is to indicate the faulted feeder by means of examining the direction of change in the reactive component of the sum current (Eqs. 14 and 15).

$$\Delta I_{0li} = \left| \underline{I}_{02i} - \underline{I}_{01i} \right| \sin\left( \varphi_{I_{0i}} - \varphi_{U_0} \right) < 0 \qquad \rightarrow \text{ unfaulted feeder} \qquad (14)$$

$$\Delta I_{0li} = \left| \underline{I}_{02i} - \underline{I}_{01i} \right| \sin\left( \varphi_{I_{0i}} - \varphi_{U_0} \right) > 0 \qquad \rightarrow \text{ faulted feeder} \qquad (15)$$

$$\Delta I_{0pi} = \left| \underline{I}_{02i} - \underline{I}_{01i} \right| \cos\left( \varphi_{I_{0i}} - \varphi_{U_0} \right) > 0 \qquad \rightarrow \text{ unfaulted feeder} \qquad (16)$$

$$\Delta I_{0pi} = \left| \underline{I}_{02i} - \underline{I}_{01i} \right| \cos\left( \varphi_{I_{0i}} - \varphi_{U_0} \right) < 0 \qquad \rightarrow \text{ faulted feeder} \qquad (17)$$

$$\varphi_{I_{0i}} = \arg\left( \Delta \underline{I}_{0i} \right) = \arg\left( \underline{I}_{02i} - \underline{I}_{01i} \right) \qquad (18)$$

$$\varphi_{U_0} = \arg\left( \Delta \underline{U}_0 \right) = \arg\left( \underline{U}_{02} - \underline{U}_{01} \right) \qquad (19)$$

where

| | |
|---|---|
| $\Delta I_{0li}$ | = change in reactive component of sum current at feeder i |
| $\Delta I_{0pi}$ | = change in real component of sum current at feeder i |
| $\underline{I}_{01i}$ | = sum current of feeder i prior to the change |
| $\underline{I}_{02i}$ | = sum current of feeder i after the change |
| $\underline{U}_{01}$ | = zero-sequence voltage prior to the change |
| $\underline{U}_{02}$ | = zero-sequence voltage after the change |
| $\varphi_{I_{0i}}$ | = phase angle of sum current change vector $\Delta \underline{I}_{0i}$ |
| $\varphi_{U_0}$ | = phase angle of zero-sequence voltage change vector $\Delta \underline{U}_0$. |

The fault indication method based on the indication of a change in the reactive component of the zero-sequence sum current (Eqs. 14 and 15) is suited for use in isolated-neutral and compensated networks. In a compensated network, the compensation offset (undercompensation) must be greater than electrical length ($B_0$) of the feeder to be monitored by this kind of fault indication method. For example, if the ground-fault current of an underground feeder cable is 50 % of the overall ground-fault current of the network and the network is operated with a degree of compensation of 70 %, the method is not suited for use on said underground feeder inasmuch the vector direction of the reactive component of the zero-sequence sum current does not change at the occurrence of a ground fault. However, the method is suited for use on other feeders supplied from the same substation, because the ground-fault current they can produce under such conditions remains smaller than 30 % of the maximum overall ground-fault current of the network. As a rule it may be said that if the compensation offset (undercompensation) exceeds the electrical length ($B_0$) of any individual feeder, Eqs. 14 and 15 may be applied without restrictions.

The method based on monitoring the direction of change in the reactive component of the sum current (Eqs. 14 and 15) is also suited for use in network compensated with distributed arc-suppression elements provided that the compensation units located at the feeders are dimensioned so as to avoid overcompensation of the feeders during a ground fault, which is a design rule generally adopted. If the ground-fault protection is based on the monitoring of the real component of the sum current, whereby the feeders may become overcompensated without disturbing the protective system, also the fault indication scheme can be implemented based on the monitoring of the real component of the sum current.

In a compensated network having a supplementary grounding resistor connected permanently in parallel with the arc-suppression reactor, fault indication can be implemented based on monitoring the direction of change in the real component of the sum current (Eqs. 16 and 17). Theoretically, the real component of the sum current vector invoked by the leakage resistance of the unfaulted feeder is in phase with the zero-sequence voltage, which means that Eq. 16 is valid. In practice, however, the leakage resistance of the feeder is very high (in the order of megaohms). Therefore, the real component of the sum current vector during a ground fault is insignificantly small, whereby high demands are imposed on the measurement accuracy. To cope with the inaccuracy of measurements, it is possible to define a threshold value for the magnitude of the real component of the feeder sum current. Then, it can be required that the real component of the sum current vector invoked by the supplementary grounding resistor and/or the faulted feeder of electrical distribution system has to exceed said threshold value by a wide margin. The predetermined threshold value may be used as a criterion complementing the results obtained from Eqs. 16 and 17.

In an isolated-neutral network, it is impossible that Eq. 14 or 15 would give zero as a result. Therefore, the sensitivity of fault indication and, hence, the result thereof is dictated only by the accuracy of measurements. In a compensated system, it is theoretically possible that a ground fault does not cause any change in the reactive component of the sum current of the faulted feeder, which means that Eqs. 14 and 15 give a zero result. This kind of a situation may occur if the compensation offset (undercompensation) is exactly equal to the electrical length ($B_0$) of the faulted feeder. Inasmuch such a situation can arise only theoretically, it does not merit to be taken into account in practical considerations.

**III Indication of an impending fault condition of feeder or faulted feeder from the sign of the ground susceptance of the feeder**

An alternative technique of indicating an impending fault condition of medium-voltage feeder is to compute the ground admittance of the feeder from changes in the sum current and zero-sequence voltage and then to examine the sign of the imaginary part of the ground admittance, that is, of the ground susceptance. The ground conductance of the feeder is ignored in the examination inasmuch this parameter cannot be determined at a sufficiently good accuracy by concurrent measurement methods. Even the sign of a ground conductance value acquired by measurements may be incorrect as compared with that obtained from a theoretical treatise. Accordingly, the criteria for identifying a feeder as either unfaulted or faulted are:

$$\mathrm{Im}\left(\frac{\Delta \dot{I}_{0i}}{\Delta \underline{U}_0}\right) < 0 \qquad \rightarrow \text{unfaulted feeder} \qquad (20)$$

$$\mathrm{Im}\left(\frac{\Delta \dot{I}_{0i}}{\Delta \underline{U}_0}\right) > 0 \qquad \rightarrow \text{faulted feeder} \qquad (21)$$

The computation is started when the change in the zero-sequence voltage exceeds a predetermined threshold value (Eq. 13). The limitations in the application and use of Eqs. 20 and 21 are the same as those related to Eqs. 14 and 15.

**IV Indication of impending fault condition of ring feeder in an electrical network from the direction of change in the sum current or from the sign of the ground susceptance of the feeder**

A high-voltage electrical distribution network is conventionally constructed using ring feeders in order to provide alternative feed paths in a faulted network and to improve the overall reliability of the network. In the following is examined the indication of a ground fault occurring in a ring feeder supplied from two feeders of one and the same substation (FIG. 3).

Ground faults of very high resistance affecting a feeder supplied from feeders connected into a ring configuration can be indicated using the same algorithms (Eqs. 14 - 21) as those applicable to a radial feeder. The only difference herein is that the sum current of a radial feeder is replaced by the sum current of the feeders feeding the ring. Later in the text, the sum of the zero-sequence currents of feeders A and B shown in FIG. 3 are referred to as "the total sum current of the ring feeder."

An impending fault condition of feeder or faulty ring feeder (AB) may be identified from the direction of change in the reactive component of the total zero-sequence sum current vector ($I_{0A} + I_{0B}$) as described below:

$$\Delta I_{0ABl} = \left|\Delta \underline{I}_{0AB}\right|\sin\!\left(\varphi_{I_{0AB}} - \varphi_{U_0}\right) < 0 \qquad \rightarrow \text{unfaulted ring} \qquad (22)$$

$$\Delta I_{0ABl} = \left|\Delta \underline{I}_{0AB}\right|\sin\!\left(\varphi_{I_{0AB}} - \varphi_{U_0}\right) > 0 \qquad \rightarrow \text{faulty ring} \qquad (23)$$

$$\Delta \underline{I}_{0AB} = \left(\underline{I}_{0A2} + \underline{I}_{0B2}\right) - \left(\underline{I}_{0A1} + \underline{I}_{0B1}\right) \qquad (24)$$

$$\varphi_{I_{0AB}} = \arg\!\left(\Delta \underline{I}_{0AB}\right) \qquad (25)$$

$$\varphi_{U_0} = \arg\!\left(\underline{U}_{0M} - \underline{U}_0{}'\right) \qquad (26)$$

where

| | |
|---|---|
| $\underline{U}_0{}'$ | = zero-sequence voltage of network prior to the change |
| $\underline{U}_{0M}$ | = zero-sequence voltage of network after the change |
| $I_{0A1}$ | = sum current of feeder A prior to the change in zero-sequence voltage |
| $I_{0B1}$ | = sum current of feeder B prior to the change in zero-sequence voltage |
| $I_{0A2}$ | = sum current of feeder A after the change in zero-sequence voltage |
| $I_{0B2}$ | = sum current of feeder B after the change in zero-sequence voltage |
| $\varphi_{I0AB}$ | = phase angle of change vector $\Delta I_{0AB}$ |
| $\varphi_{U0}$ | = phase angle of change vector $\Delta \underline{U}_0$ |
| $B_{0r}$ | = summed ground susceptance (sum of all three phases) of the ring feeder feeders (FIG. 3: A+B) |

Analogous to the preceding example, an impending fault condition of feeder or faulty ring feeder (AB) can be indicated from the direction of change in the real component of the total sum current ($I_{0A} + I_{0B}$) as follows:

$$\Delta I_{0ABp} = \left|\Delta \underline{I}_{0AB}\right|\cos\!\left(\varphi_{I_{0AB}} - \varphi_{U_0}\right) > 0 \qquad \rightarrow \text{unfaulted ring} \qquad (27)$$

$$\Delta I_{0ABp} = \left|\Delta \underline{I}_{0AB}\right| \cos\left(\varphi_{I_{0AB}} - \varphi_{U_0}\right) < 0 \qquad \rightarrow \text{faulty ring} \qquad (28).$$

## Summary

According to field tests, the methods disclosed herein provide a minimum detection sensitivity of 190 kohm. The indication method of Eqs. 3 and 5 based on the computation of the fault resistance is usable in both neutral-isolated and compensated networks. Eqs. 14 and 15, as well as 20 and 21, can be applied within the limiting condition explained in item II (Indication of an impending fault condition of feeder or faulted feeder in an electrical network from the direction of change in the sum current vector). All of the methods disclosed herein are usable for both radial feeders and ring feeders. Each one of the monitored feeders must be equipped with multifunction protective relays (at feeder terminals). The measurement data typically needed comprise one line-to-line voltage, the zero-sequence voltage, the line-to-neutral voltages (for computation of fault resistance), and the sum currents of the feeders. However, Eqs. 14 - 21 do not need measurement data about the line-to-neutral voltages. All the measurement facilities required in the method are readily available at any substation.

Obviously, the invention is not limited to the exemplary embodiments described above but rather encompasses all variants thereof within the scope of the appended claims. The various methods discussed herein may also be used in parallel in order to achieve a maximal reliable fault indication.

In the description, an underlined symbol (e.g., $\Delta \underline{U}_0$) denotes a vector. The vectors (expressed by phase angles and absolute values) used in the computations are determined by simultaneous measurements to within the accuracy affordable by the practice of measurement techniques.

In the foregoing, the invention is described using a three-phase system as an example. Obviously, the invention is also applicable to networks of other kinds of phase systems.

## References:

(Lei97): Leitloff V. et.al.: Detection of resistive single-phase earth fault in a compensated power-distribution system. ETEP Vol. 7, No 1, January/February, 1997.

## Claims

1.  A method for identification of an impending fault condition of a faulted feeder or of a faulty ring feeder or of a faulty feeder branch in an electrical distribution system, the method comprising the steps of

    - computing the absolute value ($|\Delta \underline{U}_0| = |\underline{U}_{02} - \underline{U}_{01}|$) of the zero-sequence voltage change in vector format under a changing condition of the network, whereby $\underline{U}_{01}$ is the zero-sequence voltage measured prior to the change and $\underline{U}_{02}$ is the zero-sequence voltage measured after the change,
    - comparing the computed value of the change of the zero-sequence voltage ($|\Delta U_0|$) against a predetermined threshold value ($|\Delta \underline{U}_0| \geq U_{0k}$), and
    - starting the identification of the impending fault condition of a faulty feeder or of a feeder branch or of if the change in the zero-sequence voltage exceeds the predetermined threshold value,
    **characterized in that** the impending fault condition of said faulty feeder or said faulty ring feeder or said faulty feeder branch is identified based on
    - the direction of change in the reactive or the real component of a sum current vector of said feeder or said faulty feeder or said feeder branch, or, alternatively,

    - the sign of the imaginary part $\left(\mathrm{Im}\left(\dfrac{\Delta \underline{I}_{0i}}{\Delta \underline{U}_0}\right)\right)$ of the ground admittance, whereby a positive sign in both alternatives indicates a faulty feeder.

2.  The method of claim 1, **characterized in that** a fault in an impending fault condition of feeder or faulty feeder is identified from the direction of change in the reactive component of the sum current vector according to the following equations:

$$\Delta I_{0li} = \left| \underline{I}_{02i} - \underline{I}_{01i} \right| \sin\left(\varphi_{I_{0i}} - \varphi_{U_0}\right) < 0 \qquad \rightarrow \text{unfaulted feeder} \qquad (14)$$

$$\Delta I_{0li} = \left| \underline{I}_{02i} - \underline{I}_{01i} \right| \sin\left(\varphi_{I_{0i}} - \varphi_{U_0}\right) > 0 \qquad \rightarrow \text{faulted feeder} \qquad (15)$$

$$\varphi_{I_{0i}} = \arg\left(\Delta \underline{I}_{0i}\right) = \arg\left(\underline{I}_{02i} - \underline{I}_{01i}\right) \qquad (18)$$

$$\varphi_{U_0} = \arg\left(\Delta \underline{U}_0\right) = \arg\left(\underline{U}_{02} - \underline{U}_{01}\right) \qquad (19)$$

where

$\Delta I_{0li}$ = change in reactive component of sum current at feeder i
$I_{0li}$ = sum current of feeder i prior to the change
$I_{02i}$ = sum current of feeder i after the change
$\underline{U}_{01}$ = zero-sequence voltage prior to the change
$\underline{U}_{02}$ = zero-sequence voltage after the change
$\varphi_{I_{0i}}$ = phase angle of sum current change vector $\Delta I_{0i}$
$\varphi_{U_0}$ = phase angle of zero-sequence voltage change vector $\Delta \underline{U}_0$.

3. The method of claim 1, **characterized in that** an impending fault condition of feeder or faulty feeder is identified from the direction of change in the real component of the sum current vector according to the following equations:

$$\Delta I_{0pi} = \left| \underline{I}_{02i} - \underline{I}_{01i} \right| \cos\left(\varphi_{I_{0i}} - \varphi_{U_0}\right) > 0 \qquad \rightarrow \text{unfaulted feeder} \qquad (16)$$

$$\Delta I_{0pi} = \left| \underline{I}_{02i} - \underline{I}_{01i} \right| \cos\left(\varphi_{I_{0i}} - \varphi_{U_0}\right) < 0 \qquad \rightarrow \text{faulted feeder} \qquad (17)$$

$$\varphi_{I_{0i}} = \arg\left(\Delta \underline{I}_{0i}\right) = \arg\left(\underline{I}_{02i} - \underline{I}_{01i}\right) \qquad (18)$$

$$\varphi_{U_0} = \arg\left(\Delta \underline{U}_0\right) = \arg\left(\underline{U}_{02} - \underline{U}_{01}\right) \qquad (19)$$

where

$\Delta I_{0pi}$ = change in real component of sum current at feeder i
$I_{0li}$ = sum current of feeder i prior to the change
$I_{02i}$ = sum current of feeder i after the change
$\underline{U}_{01}$ = zero-sequence voltage prior to the change
$\underline{U}_{02}$ = zero-sequence voltage after the change
$\varphi_{I_{0i}}$ = phase angle of sum current change vector $\Delta \underline{I}_{0i}$
$\varphi_{U_0}$ = phase angle of zero-sequence voltage change vector $\Delta \underline{U}_0$.

4. The method of claim 1, **characterized in that** a faulty feeder is identified by examining the sign of the imaginary part of the ground admittance ($\underline{Y}_{0i}$) as follows:

$$\mathrm{Im}\left(\frac{\Delta \underline{I}_{0i}}{\Delta \underline{U}_0}\right) < 0 \qquad \rightarrow \text{unfaulted feeder} \qquad (20)$$

$$\mathrm{Im}\left(\frac{\Delta \underline{I}_{0i}}{\Delta \underline{U}_0}\right) > 0 \qquad \rightarrow \text{faulted feeder} \qquad (21)$$

where

$\Delta I_{0i}$ = change in the sum current of feeder i
$\Delta \underline{U}_0$ = change in zero-sequence voltage.

5. The method of claim 1 for identification of a fault in a ring-connected feeder of an electrical network, **characterized in that** a fault in an impending fault condition of feeder or faulty ring feeder (AB) is identified by examining the direction of change in the reactive component of the total sum current ($I_{0A} + I_{0B}$) as follows:

$$\Delta I_{0ABl} = \left|\Delta \underline{I}_{0AB}\right| \sin\left(\varphi_{I_{0AB}} - \varphi_{U_0}\right) < 0 \qquad \rightarrow \text{unfaulted ring} \qquad (22)$$

$$\Delta I_{0ABl} = \left|\Delta \underline{I}_{0AB}\right| \sin\left(\varphi_{I_{0AB}} - \varphi_{U_0}\right) > 0 \qquad \rightarrow \text{faulty ring} \qquad (23)$$

$$\Delta \underline{I}_{0AB} = \left(\underline{I}_{0A2} + \underline{I}_{0B2}\right) - \left(\underline{I}_{0A1} + \underline{I}_{0B1}\right) \qquad (24)$$

$$\varphi_{I_{0AB}} = \arg\left(\Delta \underline{I}_{0AB}\right) \qquad (25)$$

$$\varphi_{U_0} = \arg\left(\underline{U}_{02} - \underline{U}_{01}\right) \qquad (26)$$

where

$\Delta I_{0AB1}$ = change in the reactive component of the total sum current ($\underline{I}_{0A} + \underline{I}_{0B}$) of the ring-connected feeder
$\Delta I_{0AB}$ = change in the total sum current ($\underline{I}_{0A} + \underline{I}_{0B}$) of the ring-connected feeder
$\underline{U}_{01}$ = network zero-sequence voltage prior to the change
$\underline{U}_{02}$ = network zero-sequence voltage after the change
$\underline{I}_{0A1}$ = sum current of ring-connected feeder A prior to the change in the zero- sequence voltage
$\underline{I}_{0B1}$ = sum current of ring-connected feeder B prior to the change in the zero- sequence voltage
$\underline{I}_{0A2}$ = sum current of ring-connected feeder A after the change in the zero- sequence voltage
$\underline{I}_{0B2}$ = sum current of ring-connected feeder B after the change in the zero- sequence voltage
$\varphi_{I_{0AB}}$ = phase angle of vector $\Delta\underline{I}_{0AB}$
$\varphi_{U_0}$ = phase angle of vector $\Delta\underline{U}_0$.

6. The method of claim 1 for identification of a fault in a ring-connected feeder of an electrical network, **characterized in that** a fault in an impending fault condition of feeder or faulty ring feeder (AB) is identified by examining the direction of change in the real component of the total sum current ($\underline{I}_{0A} + \underline{I}_{0B}$) as follows:

$$\Delta I_{0ABp} = \left|\Delta\underline{I}_{0AB}\right|\cos\left(\varphi_{I_{0AB}} - \varphi_{U_0}\right) > 0 \qquad \rightarrow \text{unfaulted ring} \qquad (27)$$

$$\Delta I_{0ABp} = \left|\Delta\underline{I}_{0AB}\right|\cos\left(\varphi_{I_{0AB}} - \varphi_{U_0}\right) < 0 \qquad \rightarrow \text{faulty ring} \qquad (28)$$

$$\Delta\underline{I}_{0AB} = \left(\underline{I}_{0A2} + \underline{I}_{0B2}\right) - \left(\underline{I}_{0A1} + \underline{I}_{0B1}\right) \qquad (24)$$

$$\varphi_{I_{0AB}} = \arg\left(\Delta\underline{I}_{0AB}\right) \qquad (25)$$

$$\varphi_{U_0} = \arg\left(\underline{U}_{02} - \underline{U}_{01}\right) \qquad (26)$$

where

$\Delta I_{0ABp}$ = change in the reactive component of the total sum current ($\underline{I}_{0A} + \underline{I}_{0B}$) of the ring-connected feeder
$\Delta I_{0AB}$ = change in the total sum current ($\underline{I}_{0A} + \underline{I}_{0B}$) of the ring-connected feeder
$\underline{U}_{01}$ = network zero-sequence voltage prior to the change
$\underline{U}_{02}$ = network zero-sequence voltage after the change
$\underline{I}_{0A1}$ = sum current of ring-connected feeder A prior to the change in the zero- sequence voltage
$\underline{I}_{0B1}$ = sum current of ring-connected feeder B prior to the change in the zero- sequence voltage
$\underline{I}_{0A2}$ = sum current of ring-connected feeder A after the change in the zero- sequence voltage
$\underline{I}_{0B2}$ = sum current of ring-connected feeder B after the change in the zero- sequence voltage

$\varphi_{I0AB}$ = phase angle of vector $\Delta \underline{I}_{0AB}$
$\varphi_{U0}$ = phase angle of vector $\Delta \underline{U}_0$.

**7.** The method of claim 1 for identification of a fault in a ring-connected feeder of an electrical network, **characterized in that** a fault in an impending fault condition of feeder or faulty ring feeder (AB) is identified by examining the sign of the imaginary part of ground admittance computed from the total sum current ($\underline{I}_{0A}$ + $\underline{I}_{0B}$) as follows:

$$\text{Im}\left(\frac{\Delta \underline{I}_{0AB}}{\Delta \underline{U}_0}\right) < 0 \qquad \rightarrow \text{unfaulted ring} \qquad (20)$$

$$\text{Im}\left(\frac{\Delta \underline{I}_{0AB}}{\Delta \underline{U}_0}\right) > 0 \qquad \rightarrow \text{faulty ring} \qquad (21)$$

$$\Delta \underline{I}_{0AB} = \left(\underline{I}_{0A2} + \underline{I}_{0B2}\right) - \left(\underline{I}_{0A1} + \underline{I}_{0B1}\right) \qquad (24)$$

$$\Delta \underline{U}_0 = \underline{U}_{02} - \underline{U}_{01}$$

where

$\Delta I_{0AB}$ = change in the total sum current ($I_{0A}$ + $I_{0B}$) of the ring-connected feeder
$\underline{U}_{01}$ = network zero-sequence voltage prior to the change
$\underline{U}_{02}$ = network zero-sequence voltage after the change
$\underline{I}_{0A1}$ = sum current of ring-connected feeder A prior to the change in the zero- sequence voltage
$\underline{I}_{0B1}$ = sum current of ring-connected feeder B prior to the change in the zero- sequence voltage
$\underline{I}_{0A2}$ = sum current of ring-connected feeder A after the change in the zero- sequence voltage
$\underline{I}_{0B2}$ = sum current of ring-connected feeder B after the change in the zero- sequence voltage

**8.** The method of any one of foregoing claims, **characterized in that** additionally

- the faulted phase is identified with the help of the measured line-to-phase voltages and the zero-sequence voltage $\Delta \underline{U}_0 = \underline{U}_{0M} - \underline{U}_0'$ (Eq. 6 or 10),
- for each one of the feeders i is computed the value of the fault resistance $R_{Fi}$ using the equation:

$$R_{Fi} = \frac{\left|\underline{U}_{vF}\right| \sin \varphi_{U_{vF}}}{\left|\Delta \underline{I}_{0i}\right| \sin \varphi_{I_{0i}} + B_{0i}\left|\Delta \underline{U}_0\right|}$$

where

$U_{vF}$ = line-to-ground voltage of faulted phase

$\varphi_{U_{vF}}$ =differential phase angle between line-to-ground voltage vector $\Delta\underline{U}_{vF}$ and differential voltage vector $\Delta\underline{U}_0$

$\Delta I_{0i}$ = change of sum current at feeder i due a change in zero-sequence voltage

$\varphi_{I_{0i}}$ =differential phase angle between vectors $\Delta I_{0i}$ and $\Delta\underline{U}_0$

$B_{0i}$ = summed line-to-ground susceptance of three phases of feeder i (imaginary part of ground admittance)

- the faulted phase is interpreted to be the one with a fault resistance ($R_{Fi}$) lower than a predetermined threshold value ($R_{Fk}$) (that is, $R_{Fi} < R_{Fk}$), and,
- in the case of a low-resistance ground fault (e.g., having a fault resistance smaller 1 kohm), the computed values of $R_{Fi}$ are compared with each other and faulted phase is interpreted to be the one with the lowest fault resistance.

9. The method of any one of foregoing claims for determining the insulation condition of a ring-connected feeder, **characterized in that** additionally

- the faulted phase is identified with the help of the measured line-to-phase voltages and the zero-sequence voltage $\Delta\underline{U}_0 = \underline{U}_{0M} - \underline{U}_0$' (Eq. 6 or 10),
- for each one of the ring-connected feeders is computed the value of the fault resistance $R_{Fi}$ using the equation:

$$R_{Fi} = \frac{\left|\underline{U}_{vF}\right|\sin\varphi_{U_{vF}}}{\left|\Delta\underline{I}_{0AB}\right|\sin\varphi_{I_{0AB}} + B_{0r}\left|\Delta\underline{U}_0\right|} \tag{5}$$

where

$$\Delta\underline{U}_0 = \underline{U}_{0M} - \underline{U}_0' \tag{6}$$

$$\Delta\underline{I}_{0AB} = \left(\underline{I}_{0A2} + \underline{I}_{0B2}\right) - \left(\underline{I}_{0A1} + \underline{I}_{0B1}\right) \tag{7}$$

$$\varphi_{U_0} = \arg\left(\underline{U}_{0M} - \underline{U}_0'\right), \quad \varphi_{I_{0AB}} = \arg\left(\Delta\underline{I}_{0AB}\right) - \varphi_{U_0} \tag{8}$$

$R_{Fi}$ = fault resistance of ring-connected feeder i
$\underline{U}_0$' = network zero-sequence voltage prior to the change
$\underline{U}_{0M}$ = network zero-sequence voltage after the change
$I_{0A1}$ = sum current of ring-connected feeder A prior to the change in the zero- sequence voltage
$I_{0B1}$ = sum current of ring-connected feeder B prior to the change in the zero- sequence voltage
$I_{0A2}$ = sum current of ring-connected feeder A after the change in the zero- sequence voltage
$I_{0B2}$ = sum current of ring-connected feeder B after the change in the zero- sequence voltage
$\varphi_{U_0}$ = phase angle of vector $\Delta\underline{U}_0$
$\varphi_{I_{0,AB}}$ = differential phase angle between vector $\Delta I_{0AB}$ and vector $\Delta\underline{U}_0$
$B_{0r}$ = summed line-to-ground susceptance of a ring-connected feeder (FIG. 3: A+B) (sum of all three phases).

10. The method of any one of foregoing claims for use in an isolated-neutral **characterized in that** additionally

- the line-to-ground voltages are determined in vector format, and
- the faulted phase is interpreted to be the one having the phase angle of its line-to-ground voltage leading the zero-sequence voltage change vector $\Delta\underline{U}_0 = \underline{U}_{02} - \underline{U}_{01}$ by approximately 90˚.

**11.** The method of any one of foregoing claims 1-9 for use in a compensated network, **characterized in that** additionally

- the line-to-ground voltages are determined in vector format, and
- the faulted phase is interpreted to be the one having the phase angle of its line-to-ground voltage falling within a predetermined range relative to the zero-sequence voltage change vector $\Delta\underline{U}_0$.

**Patentansprüche**

**1.** Ein Verfahren zum Identifizieren eines bevorstehenden Fehlzustandes einer fehlerhaften Versorgungsleitung oder einer fehlerhaften Ringversorgungsleitung oder eines fehlerhaften Versorgungsleitungszweiges in einem elektrischen Verteilersystem, wobei das Verfahren die folgenden Schritte aufweist:

- Berechnen des absoluten Wertes ($|\Delta\underline{U}_0|=|\underline{U}_{02}-\underline{U}_{01}|$) der Nullsequenzspannungsänderung in Vektorform in einem Änderungszustand des Netzes, wobei $\underline{U}_{01}$ die vor der Änderung gemessene Nullsequenzspannung ist und $\underline{U}_{02}$ die nach der Änderung gemessene Nullsequenzspannung ist,
- Vergleichen des berechneten Wertes der Änderung der Nullsequenzspannung ($|\Delta\underline{U}_0|$) mit einem vorbestimmten Schwellenwert ($|\Delta\underline{U}_0|\geq U_{0k}$), und
- Starten der Identifizierung des bevorstehenden Fehlzustandes einer fehlerhaften Versorgungsleitung oder eines Versorgungsleitungszweiges, wenn die Änderung der Nullsequenzspannung den vorbestimmten Schwellenwert überschreitet,
**dadurch gekennzeichnet, dass** der bevorstehenden Fehlzustand der fehlerhaften Versorgungsleitung oder der fehlerhaften Ringversorgungsleitung oder des fehlerhaften Versorgungsleitungszweiges identifiziert wird auf der Grundlage von:
- der Richtung der Änderung in der reaktiven oder der realen Komponente eines Summenstromvektors der Versorgungsleitung oder der fehlerhaften Versorgungsleitung oder des Versorgungsleitungszweiges, oder alternativ

- des Vorzeichens des Imaginärteils $\left(\mathrm{Im}\left(\dfrac{\Delta\underline{I}_{0i}}{\Delta\underline{U}_0}\right)\right)$ der Erd-Admittanz, wobei ein positives Zeichen in beiden Alternativen eine fehlerhafte Versorgungsleitung anzeigt.

**2.** Das Verfahren gemäß Anspruch 1, **dadurch gekennzeichnet, dass** ein Fehler in einem bevorstehenden Fehlzustand einer Versorgungsleitung oder einer fehlerhaften Versorgungsleitung ausgehend von der Richtung der Änderung der reaktiven Komponente des Summenstromvektors gemäß den folgenden Gleichungen identifiziert wird:

$$\Delta I_{01i} = \left|\underline{I}_{02i} - \underline{I}_{01i}\right|\sin(\varphi_{1_{0i}} - \varphi_{U0}) < 0 \quad \rightarrow \texttt{fehlerfreie}$$
$$\texttt{Versorgungsleitung (14)}$$

$$\Delta I_{01i} = \left|\underline{I}_{02i} - \underline{I}_{01i}\right|\sin(\varphi_{1_{0i}} - \varphi_{U0}) > 0 \quad \rightarrow \texttt{fehlerhafte}$$
$$\texttt{Versorgungsleitung (15)}$$

$$\varphi_{1_{0i}} = \arg(\Delta\underline{I}_{0i}) = \arg(\underline{I}_{02i} - \underline{I}_{01i}) \qquad (18)$$

$$\varphi_{U_0} = \arg(\Delta \underline{U}_0) = \arg(\underline{U}_{02} - \underline{U}_{01}) \qquad (19)$$

wobei

$\Delta I_{0li}$ = Änderung der reaktiven Komponente des Summenstroms in der Versorgungsleitung i
$\underline{I}_{01i}$ = Summenstrom der Versorgungsleitung i vor der Änderung
$\underline{I}_{02i}$ = Summenstrom der Versorgungsleitung i nach der Änderung
$\underline{U}_{01}$ = Nullsequenzspannung vor der Änderung
$\underline{U}_{02}$ = Nullsequenzspannung nach der Änderung
$\varphi I_{0i}$ = Phasenwinkel des Summenstrom- Änderungsvektors $\Delta I_{0i}$
$\varphi U_0$ = Phasenwinkel des Nullsequenzspannungs- Änderungsvektors $\Delta \underline{U}_0$.

**3.** Das Verfahren gemäß Anspruch 1, **dadurch gekennzeichnet, dass** ein bevorstehender Fehlerzustand der Versorgungsleitung oder der fehlerhaften Versorgungsleitung ausgehend von der Richtung der Änderung in der realen Komponente des Summenstromvektors gemäß den folgenden Gleichungen identifiziert wird:

$$\Delta I_{0pi} = \left| \underline{I}_{02i} - \underline{I}_{01i} \right| \cos(\varphi_{I_{0i}} - \varphi_{U0}) > 0 \qquad \rightarrow \texttt{fehlerfreie}$$

$$\texttt{Versorgungsleitung (16)}$$

$$\Delta I_{0pi} = \left| \underline{I}_{02i} - \underline{I}_{01i} \right| \cos(\varphi_{I_{0i}} - \varphi_{U0}) < 0 \qquad \rightarrow \texttt{fehlerhafte}$$

$$\texttt{Versorgungsleitung (17)}$$

$$\varphi_{I_{0i}} = \arg(\Delta \underline{I}_{0i}) = \arg(\underline{I}_{02i} - \underline{I}_{01i}) \qquad (18)$$

$$\varphi_{U_0} = \arg(\Delta \underline{U}_0) = \arg(\underline{U}_{02} - \underline{U}_{01}) \qquad (19)$$

wobei:

$AI_{0pi}$ = Änderung der realen Komponente des Summenstroms in der Versorgungsleitung i
$\underline{I}_{01i}$ = Summenstrom der Versorgungsleitung vor der Änderung
$\underline{I}_{02i}$ = Summenstrom der Versorgungsleitung i nach der Änderung
$\underline{U}_{01}$ = Nullsequenzspannung vor der Änderung
$\underline{U}_{02}$ = Nullsequenzspannung nach der Änderung
$\varphi I_{0i}$ = Phasenwinkel des Summenstrom- Änderungsvektors $\Delta I_{0i}$
$\varphi U_0$ = Phasenwinkel des Nullsequenzspannungs- Änderungsvektors $\Delta \underline{U}_0$.

**4.** Das Verfahren gemäß Anspruch 1, **dadurch gekennzeichnet, dass** eine fehlerhafte Versorgungsleitung mittels Prüfens des Vorzeichens des Imaginärteil der Erd-Admittanz ($\underline{Y}_{0i}$) wie folgt identifiziert wird:

$$\mathrm{Im}\left(\frac{\Delta \underline{I}_{0i}}{\Delta \underline{U}_0}\right) < 0 \qquad \rightarrow \text{fehlerfreie Versorgungsleitung}$$

$$(20)$$

$$\mathrm{Im}\left(\frac{\Delta \underline{I}_{0i}}{\Delta \underline{U}_0}\right) > 0 \qquad \rightarrow \text{fehlerhafte Versorgungsleitung}$$

$$(21)$$

wobei:

$\Delta \underline{I}_{0i}$ = Änderung des Summenstroms der Versorgungsleitung i
$\Delta \underline{U}_0$ = Änderung der Nullsequenzspannung.

**5.** Das Verfahren gemäß Anspruch 1 zum Identifizieren eines Fehlers in einer ringverbundenen Versorgungsleitung eines elektrischen Netzes, **dadurch gekennzeichnet, dass** ein Fehler in einem bevorstehenden Fehlerzustand einer Versorgungsleitung oder einer fehlerhaften Ringversorgungsleitung (AB) mittels Prüfens der Richtung der Änderung der reaktiven Komponente des Gesamtsummenstroms ($I_{0A} + I_{0B}$) wie folgt identifiziert wird:

$$\Delta I_{0AB1} = \left|\Delta \underline{I}_{0AB}\right| \sin(\varphi_{I_{0AB}} - \varphi_{U0}) < 0 \qquad \rightarrow \text{fehlerfreier Ring}$$

$$(22)$$

$$\Delta I_{0AB1} = \left|\Delta \underline{I}_{0AB}\right| \sin(\varphi_{I_{0AB}} - \varphi_{U0}) > 0 \qquad \rightarrow \text{fehlerhafter Ring}$$

$$(23)$$

$$\Delta \underline{I}_{0AB} = (\underline{I}_{0A2} + \underline{I}_{0B2}) - (\underline{I}_{0A1} + \underline{I}_{0B1}) \qquad (24)$$

$$\varphi_{I_{0AB}} = \arg(\Delta \underline{I}_{0AB}) \qquad (25)$$

$$\varphi_{U_0} = \arg(\underline{U}_{02} - \underline{U}_{01}) \qquad (26)$$

wobei:

$\Delta I_{0AB1}$ = Änderung der reaktiven Komponente des Gesamtsummenstroms ($\underline{I}_{0A}$ + $\underline{I}_{0B}$) der ringverbundenen Versorgungsleitung,

$\Delta I_{0AB}$ = Änderung des Gesamtsummenstroms ($\underline{I}_{0A}$ + $\underline{I}_{0B}$) der ringverbundenen Versorgungsleitung,

$\underline{U}_{01}$ = Netz-Nullsequenzspannung vor der Änderung

$\underline{U}_{02}$ = Netz-Nullsequenzspannung nach der Änderung

$\underline{I}_{0A1}$ = Summenstrom der ringverbundenen Versorgungsleitung A vor der Änderung der Nullsequenzspannung,

$\underline{I}_{0B1}$ = Summenstrom der ringverbundenen Versorgungsleitung B vor der Änderung der Nullsequenzspannung,

$\underline{I}_{0A2}$ = Summenstrom der ringverbundenen Versorgungsleitung A nach der Änderung der Nullsequenzspannung

$\underline{I}_{0B2}$ = Summenstrom der ringverbundenen Versorgungsleitung B nach der Änderung der Nullsequenzspannung

$\underline{\varphi}I_{0AB}$ = Phasenwinkel des Vektors $\Delta\underline{I}_{0AB}$

$\underline{\varphi}U_0$ = Phasenwinkel des Vektors $\Delta\underline{U}_0$.

6. Das Verfahren gemäß Anspruch 1 zum Identifizieren eines Fehlers in einer ringverbundenen Versorgungsleitung eines elektrischen Netzes, **dadurch gekennzeichnet, dass** ein Fehler in einem bevorstehenden Fehlerzustand einer Versorgungsleitung oder einer fehlerhaften Ringversorgungsleitung (AB) mittels Prüfens der Richtung der Änderung der realen Komponente des Gesamtsummenstroms ($\underline{I}_{0A}$ + $\underline{I}_{0B}$) wie folgt identifiziert wird:

$$\Delta I_{0ABp} = \left|\Delta\underline{I}_{0AB}\right|\cos(\varphi_{I_{0AB}} - \varphi_{U0}) > 0 \qquad \rightarrow \texttt{fehlerfreier Ring (27)}$$

$$\Delta I_{0ABp} = \left|\Delta\underline{I}_{0AB}\right|\cos(\varphi_{I_{0AB}} - \varphi_{U0}) < 0 \qquad \rightarrow \texttt{fehlerhafter Ring (28)}$$

$$\Delta\underline{I}_{0AB} = (\underline{I}_{0A2} + \underline{I}_{0B2}) - (\underline{I}_{0A1} + \underline{I}_{0B1}) \tag{24}$$

$$\varphi_{I_{0AB}} = \arg(\Delta\underline{I}_{0AB}) \tag{25}$$

$$\varphi_{U_0} = \arg(\underline{U}_{02} - \underline{U}_{01}) \tag{26}$$

wobei:

$\Delta I_{0ABp}$ = Änderung der reaktiven Komponente des Gesamtsummenstroms ($\underline{I}_{0A}$ + $\underline{I}_{0B}$) der ringverbundenen Versorgungsleitung,

$\Delta I_{0AB}$ = Änderung des Gesamtsummenstroms ($\underline{I}_{0A}$ + $\underline{I}_{0B}$) der ringverbundenen Versorgungsleitung,

$\underline{U}_{01}$ = Netz-Nullsequenzspannung vor der Änderung

$\underline{U}_{02}$ = Netz-Nullsequenzspannung nach der Änderung

$\underline{I}_{0A1}$ = Summenstrom der ringverbundenen Versorgungsleitung A vor der Änderung der Nullsequenzspannung,

$\underline{I}_{0B1}$ = Summenstrom der ringverbundenen Versorgungsleitung B vor der Änderung der Nullsequenzspannung,

$\underline{I}_{0A2}$ = Summenstrom der ringverbundenen Versorgungsleitung A nach der Änderung der Nullsequenzspannung

$\underline{I}_{0B2}$ = Summenstrom der ringverbundenen Versorgungsleitung B nach der Änderung der Nullsequenzspannung

$\underline{\varphi}I_{0AB}$ = Phasenwinkel des Vektors $\Delta\underline{I}_{0AB}$

$\underline{\varphi}U_0$ = Phasenwinkel des Vektors $\Delta\underline{U}_0$.

**7.** Das Verfahren gemäß Anspruch 1 zum Identifizieren eines Fehlers in einer ringverbundenen Versorgungsleitung eines elektrischen Netzes, **dadurch gekennzeichnet, dass** ein Fehler in einem bevorstehenden Fehlerzustand einer Versorgungsleitung oder einer fehlerhaften Ringversorgungsleitung (AB) mittels Prüfens des Vorzeichens des Imaginärteils der Erd-Admittanz, die aus dem Gesamtsummenstrom ($\underline{I}_{0A} + \underline{I}_{0B}$) berechnet wird, wie folgt identifiziert wird:

$$\text{Im}\left(\frac{\Delta \underline{I}_{0AB}}{\Delta \underline{U}_0}\right) < 0 \qquad\qquad \rightarrow \texttt{fehlerfreier Ring} \qquad (20)$$

$$\text{Im}\left(\frac{\Delta \underline{I}_{0AB}}{\Delta \underline{U}_0}\right) > 0 \qquad\qquad \rightarrow \texttt{fehlerhafter Ring} \qquad (21)$$

$$\Delta \underline{I}_{0AB} = (\underline{I}_{0A2} + \underline{I}_{0B2}) - (\underline{I}_{0A1} + \underline{I}_{0B1}) \qquad\qquad (24)$$

$$\Delta \underline{U}_0 = \underline{U}_{02} - \underline{U}_{01}$$

wobei:

$\Delta I_{0AB}$ = Änderung des Gesamtsummenstroms ($\underline{I}_{0A} + \underline{I}_{0B}$) der ringverbundenen Versorgungsleitung,
$\underline{U}_{01}$ = Netz-Nullsequenzspannung vor der Änderung
$\underline{U}_{02}$ = Netz-Nullsequenzspannung nach der Änderung
$\underline{I}_{0A1}$ = Summenstrom der ringverbundenen Versorgungsleitung A vor der Änderung der Nullsequenzspannung,
$\underline{I}_{0B1}$ = Summenstrom der ringverbundenen Versorgungsleitung B vor der Änderung der Nullsequenzspannung,
$\underline{I}_{0A2}$ = Summenstrom der ringverbundenen Versorgungsleitung A nach der Änderung der Nullsequenzspannung
$\underline{I}_{0B2}$ = Summenstrom der ringverbundenen Versorgungsleitung B nach der Änderung der Nullsequenzspannung.

**8.** Das Verfahren gemäß irgendeinem der vorhergehenden Ansprüche, **dadurch gekennzeichnet, dass** zusätzlich:

- die Fehlerphase mit Hilfe der gemessenen Leitung-zu-Phase-Spannungen und der Nullsequenzspannung $\Delta \underline{U}_0 = \underline{U}_{0M} - \underline{U}_0$' (Gleichung 6 oder Gleichung 10) identifiziert wird,
- für jede der Versorgungsleitungen i der Wert des Fehlerwiderstandes $R_{Fi}$ mittels der folgenden Gleichung berechnet wird:

$$R_{Fi} = \frac{\left|\underline{U}_{vF}\right| \sin \varphi_{U_{vF}}}{\left|\Delta \underline{I}_{0i}\right| \sin \varphi_{I_{0i}} + B_{0i}\left|\Delta \underline{U}_0\right|}$$

wobei:

$U_{vF}$ = Leitung-zu-Erde-Spannung der Fehlerphase,
$\varphi U_{vF}$ = Differenzphasenwinkel zwischen dem Leitung- zu-Erde-Spannungsvektor $\Delta \underline{U}_{vF}$ und dem Differenz-spannungsvektor $\Delta \underline{U}_0$,
$\Delta I_{0i}$ = Änderung des Summenstroms an der Versorgungsleitung i aufgrund einer Änderung der Nullse-

quenzspannung,
$\varphi I_{0i}$ = Differenzphasenwinkel zwischen den Vektoren $\Delta I_{0i}$ und $\Delta U_0$,
$B_{0i}$ = summierter Leitung-zu-Erde-Blindleitwert von drei Phasen der Versorgungsleitung 1 (Imaginärteil der Erd-Admittanz),

- die Fehlerphase als diejenige mit einem Fehlerwiderstand ($R_{Fi}$), der kleiner als ein vorbestimmter Schwellenwert ($R_{Fk}$) ist (das heißt $R_{Fi} < R_{Fk}$) interpretiert wird, und
- im Fall eines Niedrigwiderstand-Erdfehlers (das heißt mit einem Fehlerwiderstand von kleiner als 1 kOhm) die berechneten $R_{Fi}$-Werte miteinander verglichen werden und die Fehlerphase als diejenige interpretiert wird, die den geringsten Fehlerwiderstand aufweist.

9. Das Verfahren gemäß einem der vorhergehenden Ansprüche zum Ermitteln des Isolierungszustandes einer ringverbundenen Versorgungsleitung, **dadurch gekennzeichnet, dass** zusätzlich:

- die Fehlerphase mit Hilfe der gemessenen Leitung-zu-Phase-Spannungen und der Nullsequenzspannung $\Delta U_0 = U_{0M} - U_0'$ (Gleichung 6 oder Gleichung 10) identifiziert wird,
- für jede der ringverbundenen Versorgungsleitungen der Wert des Fehlerwiderstandes $R_{Fi}$ mittels der folgenden Gleichung berechnet wird:

$$R_{FI} = \frac{|U_{vF}|\sin\varphi_{U_{vF}}}{|\Delta I_{0AB}|\sin\varphi_{I_{0AB}} + B_{0r}|\Delta U_0|} \qquad (5)$$

wobei:

$$\Delta U_0 = U_{0M} - U_0' \qquad (6)$$

$$\Delta I_{0AB} = (I_{0A2} + I_{0B2}) - (I_{0A1} + I_{0B1}) \qquad (7)$$

$$\varphi_{U_0} = \arg(U_{0M} - U_0'), \quad \varphi_{I_{0AB}} = \arg(\Delta I_{0AB}) - \varphi_{U_0} \qquad (8)$$

$R_{Fi}$ = Fehlerwiderstand der ringverbundenen Versorgungsleitung i,
$U_0'$ = Netz-Nullsequenzspannung vor der Änderung
$U_{0M}$ = Netz-Nullsequenzspannung nach der Änderung,
$I_{0A1}$ = Summenstrom der ringverbundenen Versorgungsleitung A vor der Änderung der Nullsequenzspannung,
$I_{0B1}$ = Summenstrom der ringverbundenen Versorgungsleitung B vor der Änderung der Nullsequenzspannung
$I_{0A2}$ = Summenstrom der ringverbundenen Versorgungsleitung A nach der Änderung der Nullsequenzspannung
$I_{0B2}$ = Summenstrom der ringverbundenen Versorgungsleitung B nach der Änderung der Nullsequenzspannung
$\varphi U_0$ = Phasenwinkel des Vektors $\Delta U_0$,
$\varphi I_{0AB}$ = Differenzphasenwinkel zwischen Vektor $\Delta I_{0AB}$ und Vektor $\Delta U_0$
$B_{0r}$ = summierter Leitung-zu-Erde-Blindleitwert einer ringverbundenen Versorgungsleitung (Fig. 3: A+B) (Summe aller drei Phasen).

**10.** Das Verfahren gemäß einem der vorhergehenden Ansprüche zur Verwendung in einem Netz mit isoliertem Neutralpunkt, **dadurch gekennzeichnet, dass** zusätzlich:

- die Leitung-zu-Erde-Spannungen in Vektorform bestimmt werden, und
- die Fehlerphase als diejenige interpretiert wird, deren Phasenwinkel ihrer Leitung-zu-Erde-Spannung dem Nullsequenzspannungs-Änderungsvektor $\Delta\underline{U}_0 = \underline{U}_{02} - \underline{U}_{01}$ um ungefähr 90˚ voreilt.

**11.** Das Verfahren gemäß irgendeinem der vorhergehenden Ansprüche 1 bis 9 zur Verwendung in einem kompensierten Netz, **dadurch gekennzeichnet, dass** zusätzlich:

- die Leitung-zu-Erde-Spannungen in Vektorform bestimmt werden, und
- die Fehlerphase als diejenige interpretiert wird, deren Phasenwinkel ihrer Leitung-zu-Erde-Spannung innerhalb eines vorbestimmten Bereichs bezüglich des Nullsequenzspannungs-Änderungsvektors $\Delta\underline{U}0$ abfällt.

**Revendications**

**1.** Procédé permettant d'identifier une condition de défaillance imminente d'une ligne d'alimentation en défaut ou d'une ligne d'alimentation en boucle défectueuse ou d'une branche de ligne d'alimentation défectueuse dans un système de distribution électrique, le procédé comprenant les étapes consistant à

- calculer la valeur absolue ($|\Delta\underline{U}_0| = |\underline{U}_{02} - \underline{U}_{01}|$) du changement de tension homopolaire en format vecteur dans une condition changeante du réseau, moyennant quoi $\underline{U}_{01}$ est la tension homopolaire mesurée avant le changement et $\underline{U}_{02}$ est la tension homopolaire mesurée après le changement,
- comparer la valeur calculée du changement de la tension homopolaire ($|\Delta\underline{U}_0|$) à une valeur seuil prédéterminée ($|\Delta\underline{U}_0| \geq U_{0k}$), et
- démarrer l'identification de la condition de défaillance imminente d'une ligne d'alimentation défectueuse ou d'une branche de ligne d'alimentation ou si le changement dans la tension homopolaire excède la valeur seuil prédéterminée,
**caractérisé en ce que** la condition de défaillance imminente de ladite ligne d'alimentation défectueuse ou de ladite ligne d'alimentation en boucle défectueuse ou de ladite branche de ligne d'alimentation défectueuse est identifiée en se fondant sur
- la direction de changement dans la composante réactive ou la composante réelle d'un vecteur de courant somme de ladite ligne d'alimentation ou de ladite ligne d'alimentation en défaut ou de ladite branche de ligne d'alimentation, ou, en variante,

- le signe de la partie imaginaire $\left( \mathrm{Im}\left( \dfrac{\Delta\underline{I}_{01}}{\Delta\underline{U}_0} \right) \right)$ de

l'admittance de masse, moyennant quoi un signe positif dans les deux alternatives indique une ligne d'alimentation défectueuse.

**2.** Procédé selon la revendication 1, **caractérisé en ce qu'**une défaillance dans une condition de défaillance imminente de ligne d'alimentation ou une ligne d'alimentation défectueuse est identifiée à partir de la direction de changement dans la composante réactive du vecteur de courant somme selon les équations suivantes :

$$\Delta I_{0li} = \left| \underline{I}_{02i} - \underline{I}_{01i} \right| \sin\left( \varphi_{I_{0i}} - \varphi_{U_0} \right) < 0 \quad \rightarrow \text{ligne d'alimentation non défectueuse} \quad (14)$$

$$\Delta I_{0li} = \left| \underline{I}_{02i} - \underline{I}_{01i} \right| \sin\left( \varphi_{I_{0i}} - \varphi_{U_0} \right) > 0 \quad \rightarrow \text{ligne d'alimentation défectueuse} \quad (15)$$

$$\varphi_{I_{0i}} = \arg\left(\Delta \underline{I}_{0i}\right) = \arg\left(\underline{I}_{02i} - \underline{I}_{01i}\right) \tag{18}$$

$$\varphi_{U_0} = \arg\left(\Delta \underline{U}_0\right) = \arg\left(\underline{U}_{02} - \underline{U}_{01}\right) \tag{19}$$

où

$\Delta I_{01i}$ = changement dans la composante réactive du courant somme au niveau de la ligne d'alimentation i

$\underline{I}_{01f}$ = courant somme de la ligne d'alimentation i avant le changement

$\underline{I}_{02i}$ = courant somme de la ligne d'alimentation i après le changement

$\underline{U}_{01}$ = tension homopolaire avant le changement $\underline{U}0_2$ = tension homopolaire après le changement

$\varphi_{I01}$ = angle de phase du vecteur de changement de courant somme $\Delta I_{0i}$

$\varphi_{U0}$ = angle de phase du vecteur de changement de tension homopolaire $\Delta \underline{U}_0$.

**3.** Procédé selon la revendication 1, **caractérisé en ce qu'**une condition de défaillance imminente de ligne d'alimentation ou une ligne d'alimentation défectueuse est identifiée à partir de la direction de changement dans la composante réelle du vecteur de courant somme selon les équations suivantes :

$$\Delta I_{0pi} = \left|\underline{I}_{02i} - \underline{I}_{01i}\right| \cos\left(\varphi_{I_{0i}} - \varphi_{U_0}\right) > 0 \quad \rightarrow \text{ligne d'alimentation non défectueuse} \tag{16}$$

$$\Delta I_{0pi} = \left|\underline{I}_{02i} - \underline{I}_{01i}\right| \cos\left(\varphi_{I_{0i}} - \varphi_{U_0}\right) < 0 \quad \rightarrow \text{ligne d'alimentation défectueuse} \tag{17}$$

$$\varphi_{I_{0i}} = \arg\left(\Delta \underline{I}_{0i}\right) = \arg\left(\underline{I}_{02i} - \underline{I}_{01i}\right) \tag{18}$$

$$\varphi_{U_0} = \arg\left(\Delta \underline{U}_0\right) = \arg\left(\underline{U}_{02} - \underline{U}_{01}\right) \tag{19}$$

où

$\Delta I_{0pi}$ = changement dans la composante réelle du courant somme au niveau de la ligne d'alimentation i

$\underline{I}_{01i}$ = courant somme de la ligne d'alimentation i avant le changement

$\underline{I}_{02i}$ = courant somme de la ligne d'alimentation i après le changement

$\underline{U}_{01}$ = tension homopolaire avant le changement $\underline{U}0_2$ = tension homopolaire après le changement

$\varphi_{I01}$ = angle de phase du vecteur de changement de courant somme $\Delta I_{0i}$

$\varphi_{U0}$ = angle de phase du vecteur de changement de tension homopolaire $\Delta \underline{U}_0$.

**4.** Procédé selon la revendication 1, **caractérisé en ce qu'**une ligne d'alimentation en défaut est identifiée en examinant le signe de la partie imaginaire de l'admittance de masse ($\underline{Y}_{01}$) comme suit :

$$\mathrm{Im}\left(\frac{\Delta \underline{I}_{0i}}{\Delta \underline{U}_0}\right) < 0 \quad \rightarrow \text{ligne d'alimentation non défectueuse} \tag{20}$$

$$Im\left(\frac{\Delta \underline{I}_{0i}}{\Delta \underline{U}_0}\right) > 0 \qquad \rightarrow \text{ligne d'alimentation défectueuse} \qquad (21)$$

où
$\Delta I_{0i}$ = changement dans le courant somme de la ligne d'alimentation i
$\Delta \underline{U}_0$ = changement dans la tension homopolaire.

5. Procédé selon la revendication 1 permettant d'identifier une défaillance dans une ligne d'alimentation connectée en boucle d'un réseau électrique, **caractérisé en ce qu'**une défaillance dans une condition de défaillance imminente de ligne d'alimentation ou une ligne d'alimentation en boucle défaillante (AB) est identifiée en examinant la direction de changement dans la composante réactive du courant somme total ($\underline{I}_{0A} + \underline{I}_{0B}$) comme suit :

$$\Delta I_{0AB1} = |\Delta \underline{I}_{0AB}| \sin(\varphi_{I_{0,AB}} - \varphi_{U_0}) < 0 \qquad \rightarrow \text{ligne d'alimentation non défectueuse} \qquad (22)$$

$$\Delta I_{0AB1} = |\Delta \underline{I}_{0AB}| \sin(\varphi_{I_{0,AB}} - \varphi_{U_0}) > 0 \qquad \rightarrow \text{ligne d'alimentation défectueuse} \qquad (23)$$

$$\Delta \underline{I}_{0AB} = (\underline{I}_{0A2} + \underline{I}_{0B2}) - (\underline{I}_{0A1} + \underline{I}_{0B1}) \qquad (24)$$

$$\varphi_{I_{0AB}} = \arg(\Delta \underline{I}_{0AB}) \qquad (25)$$

$$\varphi_{U_0} = \arg(\underline{U}_{02} - \underline{U}_{01}) \qquad (26)$$

où
$\Delta I_{0AB1}$ = changement dans la composante réactive du courant somme total ($\underline{I}_{0A} + \underline{I}_{0B}$) de la ligne d'alimentation connectée en boucle
$\Delta I_{0AB}$ = changement dans le courant somme total ($\underline{I}_{0A} + \underline{I}_{0B}$) de la ligne d'alimentation connectée en boucle
$\underline{U}_{01}$ = tension homopolaire de réseau avant le changement
$\underline{U}_{02}$ = tension homopolaire de réseau après le changement
$\underline{I}_{0A1}$ = courant somme de la ligne d'alimentation en boucle A avant le changement dans la tension homopolaire
$\underline{I}_{0B1}$ = courant somme de la ligne d'alimentation en boucle B avant le changement dans la tension homopolaire
$\underline{I}_{0A2}$ = courant somme de la ligne d'alimentation en boucle A après le changement dans la tension homopolaire
$\underline{I}_{0B2}$ = courant somme de la ligne d'alimentation en boucle B après le changement dans la tension homopolaire
$\varphi_{I0AB}$ = angle de phase du vecteur $\Delta I_{0AB}$ $\varphi_{U0}$ = angle de phase du vecteur $\Delta \underline{U}_0$.

6. Procédé selon la revendication 1 permettant d'identifier une défaillance dans une ligne d'alimentation connectée en boucle d'un réseau électrique, **caractérisée en ce qu'**une défaillance dans une condition de défaillance imminente de la ligne d'alimentation ou dans la ligne d'alimentation en boucle défectueuse (AB) est identifiée en examinant la direction de changement dans la composante réelle du courant somme total ($\underline{I}_{0A} + \underline{I}_{0B}$) comme suit :

$$\Delta I_{0ABp} = |\Delta \underline{I}_{0AB}| \cos(\varphi_{I_{0AB}} - \varphi_{U_0}) > 0 \qquad \rightarrow \text{boucle non} \qquad (27)$$
défectueuse

$$\Delta I_{0ABp} = |\Delta \underline{I}_{0AB}| \cos(\varphi_{I_{0AB}} - \varphi_{U_0}) < 0 \qquad \rightarrow \text{boucle défectueuse} \qquad (28)$$

$$\Delta \underline{I}_{0AB} = (\underline{I}_{0A2} + \underline{I}_{0B2}) - (\underline{I}_{0A1} + \underline{I}_{0B1}) \qquad (24)$$

$$\varphi_{I_{0AB}} = \arg(\Delta \underline{I}_{0AB}) \qquad (25)$$

$$\varphi_{U_0} = \arg(\underline{U}_{02} - \underline{U}_{01}) \qquad (26)$$

où

$\Delta I_{0ABp}$ = changement dans la composante réactive du courant somme total ($\underline{I}_{0A}$ + $\underline{I}_{0B}$) de la ligne d'alimentation connectée en boucle

$\Delta \underline{I}_{0AB}$ = changement dans le courant somme total ($\underline{I}_{0A}$ + $\underline{I}_{0B}$) de la ligne d'alimentation connectée en boucle

$\underline{U}_{01}$ = tension homopolaire de réseau avant le changement

$\underline{U}_{02}$ = tension homopolaire de réseau après le changement

$\underline{I}_{0A1}$ = courant somme de la ligne d'alimentation en boucle A avant le changement dans la tension homopolaire

$\underline{I}_{0B1}$ = courant somme de la ligne d'alimentation en boucle B avant le changement dans la tension homopolaire

$\underline{I}_{0A2}$ = courant somme de la ligne d'alimentation en boucle A après le changement dans la tension homopolaire

$\underline{I}_{0B2}$ = courant somme de la ligne d'alimentation en boucle B après le changement dans la tension homopolaire

$\varphi_{I0AB}$ = angle de phase du vecteur $\Delta I_{0AB}$ $\varphi_{U0}$ = angle de phase du vecteur $\Delta \underline{U}_0$.

7. Procédé selon la revendication 1 permettant d'identifier une défaillance dans une ligne d'alimentation en boucle d'un réseau électrique, **caractérisé en ce qu'**une défaillance dans une condition de défaillance imminente de ligne d'alimentation ou une ligne d'alimentation en boucle défectueuse (AB) est identifiée en examinant le signe de la partie imaginaire de l'admittance de masse calculée à partir du courant somme total ($\underline{I}_{0A}$ + $\underline{I}_{0B}$) comme suit :

$$\mathrm{Im}\left(\frac{\Delta \underline{I}_{0AB}}{\Delta \underline{U}_0}\right) < 0 \qquad \rightarrow \text{boucle non} \qquad (20)$$
défectueuse

$$\mathrm{Im}\left(\frac{\Delta \underline{I}_{0AB}}{\Delta \underline{U}_0}\right) > 0 \qquad \rightarrow \text{boucle défectueuse} \qquad (21)$$

$$\Delta \underline{I}_{0AB} = (\underline{I}_{0A2} + \underline{I}_{0B2}) - (\underline{I}_{0A1} + \underline{I}_{0B1}) \qquad (24)$$

$$\Delta \underline{U}_0 = \underline{U}_{02} - \underline{U}_{01}$$

où

$\Delta \underline{I}_{0AB}$ = changement dans le courant somme total ($\underline{I}_{0A}$ +$\underline{I}_{0B}$) de la ligne d'alimentation connectée en boucle

$\underline{U}_{01}$ = tension homopolaire de réseau avant le changement

$\underline{U}_{02}$ = tension homopolaire de réseau après le changement

$\underline{I}_{0A1}$ = courant somme de la ligne d'alimentation en boucle A avant le changement dans la tension homopolaire

$\underline{I}_{0B1}$ = courant somme de la ligne d'alimentation en boucle B avant le changement dans la tension homopolaire

$\underline{I}_{0A2}$ = courant somme de la ligne d'alimentation en boucle A après le changement dans la tension homopolaire

$\underline{I}_{0B2}$ = courant somme de la ligne d'alimentation en boucle B après le changement dans la tension homopolaire.

**8.** Procédé selon l'une quelconque des revendications précédentes, **caractérisée en ce qu'**en outre

- la phase défectueuse est identifiée à l'aide des tensions ligne-phase mesurées et de la tension homopolaire $\Delta \underline{U}_0 = \underline{U}_{0M} - \underline{U}_0$' (Eq. 6 ou 10),
- pour chacune des lignes d'alimentation i est calculée la valeur de la résistance en défaut $R_{Fi}$ en utilisant l'équation :

$$R_{Fi} = \frac{\left|\underline{U}_{vF}\right| \sin \varphi_{U_{vF}}}{\left|\Delta \underline{I}_{0i}\right| \sin \varphi_{I_{0i}} + B_{0I}\left|\Delta \underline{U}_0\right|}$$

où

$U_{vF}$ = tension ligne-masse de phase en défaut

($\varphi_{UvF}$ = angle de phase différentiel entre le vecteur de tension ligne-masse $\Delta \underline{U}_{vF}$, et le vecteur de tension différentielle $\Delta \underline{U}_0$

$\Delta I_{0i}$ = changement de courant somme au niveau de la ligne d'alimentation i en raison d'un changement dans la tension homopolaire

$\varphi_{I01}$ = angle de phase différentiel entre les vecteurs $\Delta I_{0i}$ et $\Delta \underline{U}_0$

$B_{0I}$ = susceptance ligne-masse somme de trois phases de la ligne d'alimentation i (partie imaginaire de l'admittance de masse)

- la phase en défaut est interprétée comme étant une phase avec une résistance en défaut ($R_{Fi}$) inférieure à une valeur seuil prédéterminée ($R_{Fk}$) (c'est-à-dire, $R_{Fi} < R_{Fk}$) et,
- dans le cas d'une défaillance de masse de faible résistance (par exemple, ayant une résistance en défaut inférieure à 1 kohm), les valeurs calculées de $R_{Fi}$ sont comparées les unes avec les autres et la phase défectueuse est interprétée comme étant la phase présentant la résistance en défaut la plus faible.

**9.** Procédé selon l'une quelconque des revendications précédentes permettant de déterminer la condition d'isolation d'une ligne d'alimentation connectée en boucle, **caractérisé en ce qu'**en outre

- la phase en défaut est identifiée à l'aide des tensions ligne-phase mesurées et de la tension homopolaire $\Delta \underline{U}_0$ = $\underline{U}_{0M} - \underline{U}_0$' (Eq. 6 ou 10),
- pour chacune des lignes d'alimentation en boucle est calculée la valeur de la résistance en défaut $R_{Fi}$ en utilisant l'équation :

$$R_{Fl} = \frac{\left|\underline{U}_{vF}\right| \sin \varphi_{U_{vF}}}{\left|\Delta \underline{I}_{0AB}\right| \sin \varphi_{I_{0AB}} + B_{0r}\left|\Delta \underline{U}_0\right|} \qquad (5)$$

où

$$\Delta \underline{U}_0 = \underline{U}_{0M} - \underline{U}_0'$$

(6)

$$\Delta \underline{I}_{0AB} = \left( \underline{I}_{0A2} + \underline{I}_{0B2} \right) - \left( \underline{I}_{0A1} + \underline{I}_{0B1} \right)$$

(7)

$$\varphi_{U_0} = \arg\left( \underline{U}_{0M} - \underline{U}_0' \right), \quad \varphi_{I_{0AB}} = \arg\left( \Delta \underline{I}_{0AB} \right) - \varphi_{U_0}$$

(8)

$R_{Fi}$ = résistance en défaut de la ligne d'alimentation connectée en boucle i

$\underline{U}_0$' = tension homopolaire de réseau avant le changement

$\underline{U}_{0M}$ = tension homopolaire de réseau après le changement

$\underline{I}_{0A1}$ = courant somme de la ligne d'alimentation en boucle A avant le changement dans la tension homopolaire

$\underline{I}_{0B1}$ = courant somme de la ligne d'alimentation en boucle B avant le changement dans la tension homopolaire

$\underline{I}_{0A2}$ = courant somme de la ligne d'alimentation en boucle A après le changement dans la tension homopolaire

$\underline{I}_{0B2}$ = courant somme de la ligne d'alimentation en boucle B après le changement dans la tension homopolaire

$\varphi_{U0}$ = angle de phase du vecteur $\Delta \underline{U}_0$

$\varphi_{I0AB}$ = angle de phase différentiel entre le vecteur $\Delta \underline{I}_{0AB}$ et le vecteur $\Delta \underline{U}_0$

$B_{0r}$ = susceptance ligne-masse sommée d'une ligne d'alimentation connectée en boucle (Fig. 3 : A+B) (somme de la totalité des trois phases).

**10.** Procédé selon l'une quelconque des revendications précédentes à utiliser dans un neutre isolé **caractérisé en ce qu'**en outre

- les tensions ligne-masse sont déterminées en un format vecteur, et
- la phase en défaut est interprétée comme étant celle ayant l'angle de phase de sa tension ligne-masse menant au vecteur de changement de tension homopolaire $\Delta \underline{U}_0 = \underline{U}_{02} - \underline{U}_{01}$ d'environ 90 ˚.

**11.** Procédé selon l'une quelconque des revendications précédentes 1 à 9, à utiliser dans un réseau compensé, **caractérisé en ce qu'**en outre

- les tensions ligne-masse sont déterminées en un format vecteur, et
- la phase en défaut est interprétée comme étant celle ayant l'angle de phase de sa tension ligne-masse tombant dans une plage prédéterminée par rapport au changement de tension homopolaire $\Delta \underline{U}_0$.

Fig. 1

Fig. 2

Fig. 3

EP 1 195 874 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 97942985 A
- FI 100922
- EP 981572 A
- EP 98941445 A
- FI 103217
- US 4729052 A
- WO 9627138 A
- FI 973520
- FI 100922 B

### Non-patent literature cited in the description

- **Leitloff V.** Detection of resistive single-phase earth fault in a compensated power-distribution system. *ETEP,* January 1997, vol. 7 (1